# EUROPÄISCHE PATENTSCHRIFT

(11) **EP 3 290 498 B1**
(45) Veröffentlichungstag und Bekanntmachung des Hinweises auf die Patenterteilung: **17.10.2018**
(21) Anmeldenummer: 17193052.2
(22) Anmeldetag: 24.04.2012
(51) Int. Cl.: C11B 5/00, A23L 3/3499

(54) **VERWENDUNG VON METALLIONEN-KOMPLEXIERENDEN VERBINDUNGEN ZUR AROMASTABILISIERUNG**
USE OF METAL ION COMPLEXING COMPOUNDS FOR AROMA STABILISATION
UTILISATION DE LIAISONS À COMPLEXES MÉTAL-ION POUR STABILISATION AROMATIQUE

(43) Veröffentlichungstag der Anmeldung: 07.03.2018
(62) Teilanmeldung aus: 12165287.9
(73) Patentinhaber: Symrise AG, 37603 Holzminden (DE)
(72) Erfinder: Degenhardt, Andreas, BERKSHIRE, SL6 4LL (GB); Krammer, Gerhard, 37603 Holzminden (DE); Backes, Michael, 37603 Holzminden (DE)
(74) Vertreter: Eisenführ Speiser

(56) Entgegenhaltungen:
- WO-A2-2010/010546
- CA-A1- 2 457 993
- DATABASE WPI Week 198023 Thomson Scientific, London, GB; AN 1980-40404C XP002684466, & JP 55 054883 A (ASAMA KASEI KK) 22. April 1980 (1980-04-22)

## Beschreibung

Die vorliegende Erfindung betrifft die Verwendung von einer, zwei, drei oder mehr Verbindungen der Formel 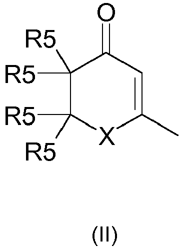 und/oder deren pharmazeutisch akzeptablen Salzen zur Inhibition der durch zwei- oder höherwertige Metallionen katalysierten Oxidation von Fettsäuren und/oder Triacylglycerolen bzw. des durch Metallionen katalysierten Ranzigwerdens von Erzeugnissen, welche ein oder mehrere Fettsäuren und/oder ein oder mehrere Triacylglycerole umfassen.

Die Verbindungen bzw. deren Salze bewirken dabei vermutlich eine Komplexierung von Metallionen in fett- und/oder ölhaltigen Lebensmitteln und stabilisieren so deren Aroma.

Die Verbindungen (II) sowie (la) und (III) (wie ebenfalls hierin beschrieben) wirken dabei als Antioxidationsmittel. Die Bedeutungen der Reste R5 sind weiter unten beschrieben.

Ein weiterer Aspekt der vorliegenden Erfindung betrifft Mischungen, umfassend eine oder mehrere Verbindungen der Formel (II) und/oder ein oder mehrere Salze von Verbindungen der Formel (II), Fettsäure(n) und/oder Triacylglycerol(e) sowie (unterschiedliche) Metallionen (wie unten definiert), jeweils in den unten beschriebenen Mengenanteilen. Die Verbindungen der Formel (II) wirken in solchen Mischungen als Antioxidationsmittel und inhibieren die durch zwei- oder höherwertige Metallionen katalysierte Oxidation der Fettsäuren bzw. Triacylglycerole (TAG, auch Triglyceride oder Triacylglyceride oder Triacylglycerine genannt).

Die vorliegende Erfindung betrifft zudem bestimmte oral konsumierbare Zubereitungen, die eine erfindungsgemäße Mischung sowie ein Substrat oder einen Trägerstoff, umfassen.

Ferner betrifft die vorliegende Erfindung ein entsprechendes Verfahren zur Behandlung von Fettsäuren und/oder TAG oder von Erzeugnissen, umfassend Fettsäuren und/oder TAG, so dass die Oxidation der Fettsäuren und/oder der Triacylglycerole bzw. das Ranzigwerden des Erzeugnisses, welches ein oder mehrere Fettsäuren und/oder ein oder mehrere Triacylglycerole umfasst und/oder die durch die Einwirkung von Luftsauerstoff verursachte chemische und/oder sensorische Veränderung des Erzeugnisses, das ein oder mehrere Fettsäuren und/oder ein oder mehrere Triacylglycerole umfasst, inhibiert wird.

Weitere Aspekte der vorliegenden Erfindung und deren bevorzugte Ausgestaltungen ergeben sich aus der folgenden Beschreibung, den Ausführungsbeispielen und den Ansprüchen.

Fette und Öle (pflanzlichen oder tierischen Ursprungs), die in der Lebensmittelindustrie zum Einsatz kommen, sind verderblich. Sie unterliegen chemischen Veränderungen, wobei der Vorgang der Oxidation durch Einwirkung von Luftsauerstoff (Autoxidation) problematisch ist, der insbesondere durch erhöhte Temperatur und Licht beschleunigt wird. Als Oxidationsprodukte reichern sich überwiegend Zerfallsprodukte der Öle/Fette an, die sich im Wesentlichen aus kurzkettigen Carbonsäuren, Aldehyden, Alkoholen und Peroxiden zusammensetzen. Auf diese Art verdorbene Lebensmittel werden meistens durch einen deutlich unangenehmen, allgemein als ranzig bezeichneten Geruch und/oder Geschmack wahrgenommen. Eine kühle, trockene und möglichst luftunzugängliche Lagerung fetthaltiger Produkte erhöht deren Qualität und Beständigkeit.

Öle und Fette sind Ester des dreiwertigen Alkohols Glycerin mit unverzweigten, aliphatischen Monocarbonsäuren (den Fettsäuren). Diese Ester werden als Triacylglycerole bezeichnet. Die Fettsäuren weisen dabei eine große Variabilität bezüglich der Kettenlänge und der Anzahl an Mehrfachbindungen auf. Insbesondere ungesättigte Fettsäuren bzw. TAG sind von unerwünschten Oxidationsprozessen betroffen.

In der Lebensmittelindustrie stellt die Aroma- und Geschmacksstabilität ein Problem mit beträchtlichen wirtschaftlichen Konsequenzen dar. Oftmals sind Spuren von Metallen und deren Ionen an oxidativen Abbaureaktionen beteiligt, die zum Auftreten von Aromafehlern führen und damit zur Instabilität des Produktes beitragen. Es wird häufig versucht, die vorhandenen freien Metallionen durch Zugabe von komplexierenden Substanzen zu binden und/oder zu inaktivieren. Insoweit sind eine Reihe von komplexierenden Substanzen bekannt (z.B. Ethylendiamintetraessigsäure - EDTA), die in ihrer Verwendung jedoch häufig lebensmittelrechtlichen Beschränkungen unterliegen.

Das Vorhandensein von Metallionen hat eine begünstigende Wirkung auf den Oxidationsprozess, da sie radikalisch ablaufende Reaktionen unterstützen. Als eine unerwünschte Oxidation besonders begünstigend gelten Eisenionen.

Als besonders anfällig gegenüber Oxidation gelten TAG und Fettsäuren mit mehrfach ungesättigten Fettsäuren, weshalb insbesondere solche Öle und Fette bzw. Produkte umfassend solche Öle und Fette kühl gelagert und kaum erhitzt werden sollten.

Insbesondere Kleinmoleküle und Oligopeptide, die spezifisch Eisenionen komplexieren, sind als natürliche Eisenträger, sogenannte Siderophore bekannt. Diese Stoffe werden primär von Mikroorganismen, aber auch von Pflanzen gebildet (Phytosiderophore). Die Verwendung solcher Verbindungen bei der Lebensmittelherstellung ist bereits bekannt; sie dient dem Ziel, eine unerwünschte Fettoxidation durch Komplexierung störender Metallionen, insbesondere Eisenionen, zu unterdrücken.

So werden in CA 2 457 993 Methoden beschrieben, bei denen unter Verwendung von Siderophoren und organischen Säuren die Oxidation von Lipiden in Lebensmitteln verzögert wird.

In EP 2 149 308 wird die Verwendung natürlicher Antioxidationsmittel in Lebensmitteln beschrieben, wobei Nicotianamin, ein Phytosiderophor, als natürlicher Ersatz für EDTA eingesetzt wird.

In WO 2005/032275 werden Antioxidantien bzw. Extrakte aus Bambusblättern (sogenannte AOB), sowie deren antioxidativen und Metallionen-komplexierenden Eigenschaften beschrieben. Die Verwendung als Lebensmittelzusatzstoff soll die Autoxidation von Lipiden blockieren und die Chelatisierung von Übergangsmetallionen bewirken.

In GB 886,519 wird der Einsatz chelatisierender Verbindungen, wie beispielsweise Citronensäure, Weinsäure, Gluconsäure und Polyphosphate, zum Komplexieren von insbesondere Eisenionen offenbart.

Eine schützende, antioxidative Wirkung von Benzoesäure bzw. Benzoesäurederivaten ist ebenfalls bekannt. So wurde beispielsweise die antioxidative Wirkung von p-Hydroxybenzoesäure und mehreren methoxy- oder hydroxysubstitutierten Derivaten untersucht (Natella F, Nardini M, Di Felice M, Scaccini C (1999) Benzoic and Cinnamic Acid Derivatives as Antioxidants: Structure-Activity Relation. J. Agric. Food Chem. 47, 1453-1459).

WO 2010/010546 A2 offenbart kostensparende Speiseölmischungen aus Pflanzen- oder Gemüsequellen umfassend einen geringen Gewichtsprozentsatz von mindestens einem hoch ölsäurehaltigem Öl, einen ergänzend hohen Gewichtsprozentsatz von mindestens einem Öl mit geringem Ölsäureanteil und Antioxidans-Additive in einer Menge, die die organoleptische Qualität nicht beeinflusst, wobei die Ölmischungen einen hocheffektiven, synergistischen, oxidationshindernden Effekt bei Bratbedingungen zeigen.

JP 55054883 A offenbart ein Verfahren umfassend das Kombinieren von (a) Flavonoiden und (b) Aminosäuren mit Nahrungsmitteln und Getränken, wobei die Kombination aus (a) und (b) synergistisch antioxidierende Eigenschaften zeigt.

CN 1795767 A beschreibt eine antioxidative Zusammensetzung umfassend Theanin, welches das Auftreten aktiver Sauerstoffspezies in der Form von O₂⁻, H₂O₂ und HOCl unterdrücken kann oder den Gehalt an aktiven Sauerstoffspezies in der Zusammensetzung reduzieren kann. Die antioxidative Zusammensetzung kann in Nahrungsmitteln oder Pharmazeutika eingesetzt werden.

Es war die primäre Aufgabe der vorliegenden Erfindung, neue Verfahren bzw. Mittel anzugeben zur Inhibition der durch zwei- oder höherwertige Metallionen katalysierten Oxidation von Fettsäuren und/oder Triacylglycerolen bzw. des durch Metallionen katalysierten Ranzigwerdens von Erzeugnissen, welche ein oder mehrere Fettsäuren und/oder ein oder mehrere Triacylglycerole umfassen.

Eine spezielle zusätzliche Aufgabe der vorliegenden Erfindung war es, eine Substanz oder ein Aroma mit funktionellen Eigenschaften bereitzustellen, welche(s) die Fettoxidation (Autoxidation) und somit das Auftreten von ranzigen Aromanoten deutlich verzögert oder gänzlich unterdrückt.

Weitere sowie besonders bevorzugte Aufgabenstellungen und Vorteile der vorliegenden Erfindung ergeben sich aus der nachfolgenden Beschreibung, den Beispielen sowie den beigefügten Patentansprüchen.

Die vorliegende Erfindung basiert auf der überraschenden Erkenntnis, dass sich bestimmte aroma-aktive Verbindungen, nämlich Verbindungen der Formel (II) sowie deren pharmazeutisch akzeptable Salze hervorragend zur Inhibition der durch zwei- oder höherwertige Metallionen katalysierten Oxidation von Fettsäuren und/oder Triacylglycerolen bzw. des durch Metallionen katalysierten Ranzigwerdens von Erzeugnissen, welche ein oder mehrere Fettsäuren und/oder ein oder mehrere Triacylglycerole umfassen, eignen. Gesagtes gilt entsprechend für Verbindungen der Formeln (Ia) und (III) (wie hierin beschrieben).

Die vorangehend genannte primäre Aufgabe der vorliegenden Erfindung wird demnach erfindungsgemäß gelöst durch die Verwendung von einer, zwei, drei oder mehr Verbindungen ausgewählt aus der Gruppe bestehend aus
i) Verbindungen der Formel (II) 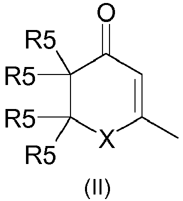 wobei
   jeder Rest R5 unabhängig von der Bedeutung der jeweils anderen Reste R5 H oder CH₃ bedeutet
   und
   X CH₂ oder CO bedeutet
   und deren pharmazeutisch akzeptablen Salzen zur Inhibition der durch zwei- oder höherwertige Metallionen katalysierten Oxidation von Fettsäuren und/oder Triacylglycerolen bzw. des durch Metallionen katalysierten Ranzigwerdens von Erzeugnissen, welche ein oder mehrere Fettsäuren und/oder ein oder mehrere Triacylglycerole umfassen.
   Ebenfalls hierin beschrieben ist die Verwendung von einer, zwei, drei oder mehr Verbindungen ausgewählt aus der Gruppe bestehend aus
ii) der Formel (Ia) (Theanin) 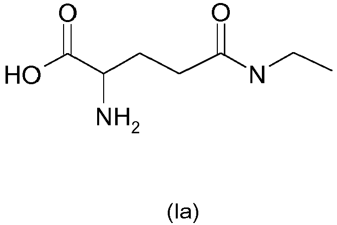 vorzugsweise L-Theanin,
   und deren pharmazeutisch akzeptablen Salzen,
   und
iii) der Verbindung der Formel (III) 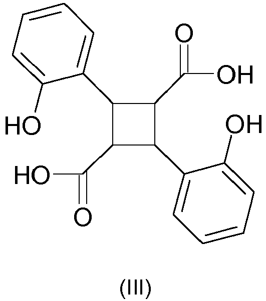 und deren pharmazeutisch akzeptablen Salzen
   zur Inhibition der durch zwei- oder höherwertige Metallionen katalysierten Oxidation von Fettsäuren und/oder Triacylglycerolen bzw. des durch Metallionen katalysierten Ranzigwerdens von Erzeugnissen, welche ein oder mehrere Fettsäuren und/oder ein oder mehrere Triacylglycerole umfassen.

Die erfindungsgemäßen Verbindungen der Formeln (Ia) und (III) liegen in ihren pharmazeutisch akzeptablen Salzen als ein- oder mehrwertige Anionen vor, wobei als Gegenionen einfach positiv geladene Kationen der ersten Hauptgruppe, Ammoniumionen und/oder zweiwertige Kationen der zweiten Hauptgruppe vorliegen, wobei die Ordnungszahl der Gegenionen aus der ersten und zweiten Hauptgruppe nicht größer 20 ist (d.h. 20 oder kleiner). Bevorzugte pharmazeutisch akzeptable Salze sind diejenigen Salze, die als Gegenionen Na⁺, K⁺, NH₄⁺, Ca₂⁺ und/oder Mg₂⁺ enthalten.

Bevorzugt ist die erfindungsgemäße Verwendung von einer, zwei, drei oder mehr Verbindungen ausgewählt aus der Gruppe bestehend aus
i) Verbindungen der Formel (II) 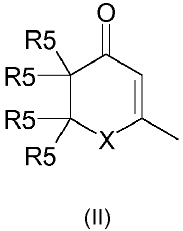 wie vorstehend definiert, ausgewählt aus der Gruppe bestehend aus
   Verbindung (IIa) (3,5,5-Trimethyl-2-cyclohexen-1-on (Isophoron)) und Verbindung (IIb) (2,6,6-Trimethyl-2-cyclohexen-1,4-dion (Ketoisophoron))

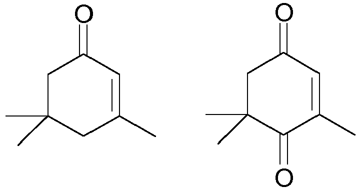

Die bevorzugte erfindungsgemäße Verwendung von Verbindungen der Formel (II) und ihren Salzen verhindert besonders gut das Ranzigwerden von Fettsäuren und/oder TAG bzw. von Erzeugnissen, die Fettsäuren und/oder TAG umfassen. Diese besonders gute Verhinderung des Ranzigwerdens war bisher für diese Verbindungen und deren Salzen nicht bekannt. Gesagtes gilt entsprechend für die Verwendung von Verbindungen der Formeln (Ia) und (III) und deren Salzen.

Die erfindungsgemäße Verbindung der Formel (II) und die ebenfalls hierin beschriebenen Verbindungen der Formeln (Ia) und (III) weisen dabei eine besonders gute inhibierende Aktivität auf. Eine gute inhibierende Aktivität bedeutet, dass bereits geringe Einsatzkonzentrationen dieser Verbindungen die gewünschte Inhibition bei erfindungsgemäßer Verwendung (wie oben beschrieben, vorzugsweise wie oben als bevorzugt bezeichnet) bewirken (zu den genauen Konzentrationsangaben siehe weiter unten).

Es hat sich außerdem überraschenderweise gezeigt, dass die erfindungsgemäßen Verbindungen der Formel (II) und die der ebenfalls hierin beschriebenen Formeln (Ia) und (III) neben der Fähigkeit zur Inhibition der durch zwei- oder höherwertige Metallionen katalysierten Oxidation von Fettsäuren und/oder TAG bzw. des durch Metallionen katalysierten Ranzigwerdens von Erzeugnissen, welche ein oder mehrere Fettsäuren und/oder ein oder mehrere TAG umfassen, auch aromatisierende Eigenschaften aufweisen. Die erfindungsgemäßen Verbindungen der Formel (II) und die der ebenfalls hierin beschriebenen Formeln (Ia) und (III) sind somit aroma-aktive Verbindungen. Aufgrund der zuvor beschriebenen guten Aktivität dieser Verbindungen zur Inhibition der Autoxidation liegen bevorzugte Einsatzkonzentrationen in dem Konzentrationsbereich, der üblicherweise für Aromastoffe verwendet wird. Da diese Verbindungen überraschenderweise aromatisierend sind, trägt die erfindungsgemäße Verwendung der Verbindungen der Formel (II) auch in positiver Weise zum Aroma und Geschmack bei. Das zuvor gesagte trifft auch auf erfindungsgemäße Mischungen und erfindungsgemäße oral konsumierbare Zubereitungen zu. Entsprechendes gilt auch für die Verwendung der Verbindungen der Formeln (Ia) und (III).

Insbesondere zweiwertige Metallionen begünstigen das Auftreten eines ranzigen Aromas bzw. Geschmackes. Auch höherwertige, insbesondere dreiwertige Metallionen katalysieren jedoch den unerwünschten Autoxidationsprozess. Eine Liste von zwei- und dreiwertigen Metallionen, die das Auftreten eines ranzigen Aromas bzw. Geschmackes begünstigen, ist weiter unten zu finden.

Bevorzugt ist die erfindungsgemäße Verwendung (wie oben beschrieben, vorzugsweise wie oben als bevorzugt bezeichnet) zur Inhibition der durch zwei- oder höherwertige Metallionen katalysierten Oxidation von Fettsäuren und/oder TAG bzw. des durch Metallionen katalysierten Ranzigwerdens von Erzeugnissen, welche ein oder mehrere Fettsäuren und/oder ein oder mehrere TAG umfassen, wobei die Fettsäuren ausgewählt sind aus der Gruppe bestehend aus gesättigten Fettsäuren sowie einfach, zweifach, dreifach und mehr als dreifach ungesättigten Fettsäuren
und/oder
die Triacylglycerole gesättigte Fettsäurereste, einfach ungesättigte Fettsäurereste, zweifach ungesättigte Fettsäurereste, dreifach ungesättigte und/oder mehr als dreifach ungesättigte Fettsäurereste enthalten.

Die erfindungsgemäße Verwendung (wie oben beschrieben, vorzugsweise wie oben als bevorzugt bezeichnet) zur Inhibition der durch zwei- oder höherwertige Metallionen katalysierten Oxidation von Fettsäuren und/oder TAG bzw. des durch Metallionen katalysierten Ranzigwerdens von Erzeugnissen, wird in bevorzugten Ausgestaltungen der Erfindung durch Zugabe weiterer, antioxidativer und/oder konservierender Verbindungen unterstützt. Siehe dazu die Ausführungen weiter unten.

Gemäß einem weiteren Aspekt betrifft die vorliegende Erfindung eine Mischung umfassend
(a) ein, zwei oder mehr Verbindungen und/oder ein, zwei oder mehr Salze der Verbindungen der Formel (II),
(b) ein, zwei, drei oder mehr Fettsäuren und/oder Triacylglycerole,
(c) keine oder ein, zwei, drei oder mehr unterschiedliche Metallionen
ausgewählt aus der Gruppe bestehend aus Metallkationen der ersten und zweiten Hauptgruppe mit einer Ordnungszahl größer 20, Übergangsmetallkationen und metallischen und halbmetallischen Kationen der dritten, vierten, fünften und sechsten Hauptgruppe, wobei die Kationen bevorzugt ausgewählt sind aus der Gruppe bestehend aus Eisen- (Fe), Kupfer- (Cu), Mangan- (Mn), Zink- (Zn), Nickel- (Ni), Cadmium- (Cd), Blei-(Pb) Cobalt- (Co), Arsen- (As) und Aluminiumionen (Al), wobei die Kationen besonders bevorzugt ausgewählt sind aus der Gruppe bestehend aus Eisen- (Fe), Kupfer- (Cu) und Zinkionen (Zn), wobei
die Gesamtstoffmenge von Verbindungen der Komponente (a) im Bereich von 0,01 bis 2,9 mmol pro kg Mischung liegt, bevorzugt im Bereich von 0,05 bis 0,20 mmol pro kg Mischung,
und/oder
die Gesamtmenge an Fettsäuren und Triacylglycerolen (Komponente (b)) im Bereich von 99,96400 bis 99,99972 Gew.-% liegt, bevorzugt im Bereich von 99,987600 bis 99,99820 Gew.-%, besonders bevorzugt im Bereich von 99,99000 bis 99,99640 Gew.-%
und/oder
die Gesamtmenge an Eisen- (Fe), Kupfer- (Cu), Mangan- (Mn), Zink- (Zn), Nickel- (Ni), Cadmium- (Cd), Blei- (Pb), Cobalt- (Co), Arsen- (As) und Aluminiumionen (Al) im Bereich von 0,00020 bis 0,02000 Gew.-% liegt, bevorzugt im Bereich von 0,00100 bis 0,01000 Gew.-%, und besonders bevorzugt im Bereich von 0,00200 bis 0,00800 Gew.-%
und/oder
die Gesamtmenge an Verbindungen der Komponente (a), an Fettsäuren und Triacylglycerolen (Komponente (b)) und an Metallionen (Komponente (c)) mindestens 99,96408 Gew.-% beträgt, bevorzugt mindestens 99,98840 Gew.-%, besonders bevorzugt mindestens 99,99160 Gew.-%,
und/oder
das Verhältnis der Gesamtmassen an Verbindungen der Komponente (a) und Fettsäuren und Triacylglycerolen (Komponente (b)) im Bereich von 1 : 1,25 *10⁶ bis 1 : 6250 liegt und/oder
das Verhältnis der Gesamtmasse an Verbindungen der Komponente (a) und der Gesamtmasse von Eisen- (Fe), Kupfer- (Cu), Mangan- (Mn), Zink- (Zn), Nickel- (Ni), Cadmium- (Cd), Blei- (Pb), Cobalt- (Co), Arsen- (As) und Aluminiumionen (Al) im Bereich von 1 : 250 bis 1 : 0,0125 liegt,
wobei die Gewichtsprozentangaben jeweils bezogen sind auf die Gesamtmasse der Mischung.

Ebenfalls hierin beschrieben sind Mischungen mit den gleichen Eigenschaften, bei denen jedoch Bestandteil (a) aus ein, zwei oder mehr Verbindungen und/oder ein, zwei oder mehr Salze der Verbindungen der Formeln (Ia) und (III) ausgewählt ist.

Eine solche erfindungsgemäße Mischung ergibt sich regelmäßig bei der erfindungsgemäßen Verwendung. Komponente (a) wird dabei üblicherweise zu den genannten Zwecken mit einer Substanz kontaktiert, beispielsweise vermischt, welche die Komponenten (b) und (c) umfasst.

Sämtliche Ausführungen zu bevorzugten Ausgestaltungen der erfindungsgemäßen Verwendung gelten entsprechend auch für die erfindungsgemäßen Mischungen, und umgekehrt.

In einer erfindungsgemäßen Mischung (wie oben beschrieben, vorzugsweise umfassend die oben beschriebenen bevorzugten und besonders bevorzugten Bestandteile) liegen die Verbindungen der Komponente (a) vorzugsweise in einer Gesamtkonzentration vor, die geeignet ist,
- die Oxidation der Bestandteile der Komponente (b) zu inhibieren, d.h. die Oxidation der ein, zwei, drei oder mehr Fettsäuren und/oder Triacylglycerole von Fettsäuren und/oder
- das Ranzigwerden der Mischung zu inhibieren
   und/oder
- durch die Einwirkung von Luftsauerstoff verursachte chemische und/oder sensorische Veränderungen der Mischung zu inhibieren.

Verglichen mit einer Vergleichsmischung, die bei ansonsten gleicher Zusammensetzung keine Verbindungen der Komponente (a) umfasst, tritt dann in der erfindungsgemäßen Mischung ein ranziger Geschmack bzw. ein ranziges Aroma deutlich später auf bzw. wird ein späterer oxidativer Zerfall der in der Mischung enthaltenen Bestandteile der Komponente (b) beobachtet.

Die Inhibition ist besonders wirksam, wenn in der erfindungsgemäßen Mischung (wie oben beschrieben, vorzugsweise umfassend die oben beschriebenen bevorzugten und besonders bevorzugten Bestandteile)
die Gesamtstoffmenge von Verbindungen der Komponente (a) im Bereich von 0,01 bis 2,9 mmol pro kg Mischung liegt, bevorzugt im Bereich von 0,05 bis 0,20 mmol pro kg Mischung,
und/oder
die Gesamtmenge an Fettsäuren und Triacylglycerolen (Komponente (b)) im Bereich von 99,96400 bis 99,99972 Gew.-% liegt, bevorzugt im Bereich von 99,987600 bis 99,99820 Gew.-%, besonders bevorzugt im Bereich von 99,99000 bis 99,99640 Gew.-%
und/oder
die Gesamtmenge an Eisen- (Fe), Kupfer- (Cu), Mangan- (Mn), Zink- (Zn), Nickel- (Ni), Cadmium- (Cd), Blei- (Pb), Cobalt- (Co), Arsen- (As) und Aluminiumionen (Al) im Bereich von 0,00020 bis 0,02000 Gew.-% liegt, bevorzugt im Bereich von 0,00100 bis 0,01000 Gew.-%, und besonders bevorzugt im Bereich von 0,00200 bis 0,00800 Gew.-%
und/oder
die Gesamtmenge an Verbindungen der Komponente (a), an Fettsäuren und Triacylglycerolen (Komponente (b)) und an Metallionen (Komponente (c)) mindestens 99,96408 Gew.-% beträgt, bevorzugt mindestens 99,98840 Gew.-%, besonders bevorzugt mindestens 99,99160 Gew.-%,
und/oder
das Verhältnis der Gesamtmassen an Verbindungen der Komponente (a) und Fettsäuren und Triacylglycerolen (Komponente (b)) im Bereich von 1 : 1,25 *10⁶ bis 1 : 6250 liegt und/oder
das Verhältnis der Gesamtmasse an Verbindungen der Komponente (a) und der Gesamtmasse von Eisen- (Fe), Kupfer- (Cu), Mangan- (Mn), Zink- (Zn), Nickel- (Ni), Cadmium- (Cd), Blei- (Pb), Cobalt- (Co), Arsen- (As) und Aluminiumionen (Al) im Bereich von 1 : 250 bis 1 : 0,0125 liegt,
wobei die Gewichtsprozentangaben jeweils bezogen sind auf die Gesamtmasse der Mischung.

Ein ranziger Geschmack bzw. ein ranziges Aroma wird häufig erst dann wahrgenommen, wenn die bei der Autoxidation gebildeten Abbauprodukte jeweils eine definierte Konzentration (Geschmacksschwellenwert) überschreiten. Übliche Abbauprodukte sind beispielsweise Propanal; Pentanal; Hexanal; 2E-Hexenal; 2E-Heptenal; 2E,4Z-Heptadienal; 2E,4E-Heptadienal; 2E-Decenal, 2E,4E-Nonadienal; 2E-Undecenal; 2E,4Z-Decadienal; 2E,4E-Decadienal und 2E,4E,7Z-Decatrienal.

Eine bevorzugte erfindungsgemäße Mischung (wie oben beschrieben, vorzugsweise umfassend die oben beschriebenen bevorzugten und besonders bevorzugten Bestandteile) ist eine Mischung, die
maximal 3200 µg/kg Hexanal, d.h. (3200 µg Hexanal) / (kg Mischung), bevorzugt maximal 1600 µg/kg Hexanal und besonders bevorzugt maximal 320 µg/kg Hexanal
und/oder (vorzugsweise und)
maximal 40 µg/kg (E, Z)-2,4-Decadienal, d.h. (40 µg (E, Z)-2,4-Decadienal) / (kg Mischung), bevorzugt maximal 20 µg/kg (E, Z)-2,4-Decadienal und besonders bevorzugt maximal 4 µg/kg (E, Z)-2,4-Decadienal
und/oder (vorzugsweise und)
maximal 1800 µg/kg (E, E)-2,4-Decadienal, d.h. (1800 µg (E, E)-2,4-Decadienal) / (kg Mischung), bevorzugt maximal 900 µg/kg (E, E)-2,4- Decadienal und besonders bevorzugt maximal 180 µg/kg (E, E)-2,4- Decadienal
und/oder (vorzugsweise und)
maximal 140000 µg/kg (E)-2-Heptenal, d.h (140000 µg (E)-2-Heptenal) / (kg Mischung), bevorzugt maximal 70000 µg/kg (E)-2-Heptenal und besonders bevorzugt maximal 14000 µg/kg (E)-2-Heptenal
enthält.

Eine bevorzugte erfindungsgemäße Mischung (wie oben beschrieben, vorzugsweise wie oben als bevorzugt beschrieben) liegt somit beispielsweise vor, wenn keine der maximalen Konzentrationen an Hexanal (3200 µg/kg), (E, Z)-2,4-Decadienal (40 µg/kg), (E, E)-2,4- Decadienal (1800 µg/kg) und (E)-2-Heptenal (140000 µg/kg) in der Mischung überschritten wird.

Eine erfindungsgemäße Mischung (wie oben beschrieben, vorzugsweise wie oben als bevorzugt beschrieben) ist insbesondere dann bevorzugt, wenn die Geschmacksschwellenwerte der zuvor genannten Abbauprodukte erst nach langer Lagerungszeit überschritten werden, vorzugsweise erst nach Überschreiten des Mindesthaltbarkeitsdatums. Unter Lagerung versteht man dabei die für das Produkt ausgewiesene, optimale Lagerungsbedingung.

Die Oxidationsbeständigkeit von tierischen und pflanzlichen Fetten und Ölen bzw. Fettsäuren kann experimentell bestimmt werden (DIN EN ISO 6886:2008). Hierzu werden die Fettsäuren bzw. die TAG besonders oxidationsfördernden Bedingungen ausgesetzt (100 °C bis 120°C). Gemäß Norm wird durch die temperierte Probe ein gereinigter Luftstrom geleitet, der die bei der Oxidation freigesetzen Gase in einen Kolben mit vollentsalztem oder destilliertem Wasser überführt. Die Konzentration an Abbauprodukten wird bei diesem Verfahren (der sogenannten Ranzimatmethode) zeitabhängig mittels Leitfähigkeitsmessung ermittelt. Die Oxidationsbeständigkeit wird mittels der Induktionsperiode angegeben. Dabei handelt es sich um den Zeitraum zwischen Beginn der Messung und dem Zeitpunkt, an dem die Bildung von Abbauprodukten schnell zuzunehmen beginnt. Das Ende der Induktionsperiode wird daher angezeigt, wenn die Leitfähigkeit schnell anzusteigen beginnt. Dieser Anstieg wird durch die Anreicherung flüchtiger Fettsäuren verursacht, die während des Oxidationsprozesses erzeugt und in den Kolben überführt werden. Der Fachmann wählt bei Anwendung dieses Verfahrens eine Temperatur, die für die jeweilige(n) TAG bzw. Fettsäure(n) geeignet ist. Die optimale Induktionsperiode beträgt gemäß den Ausführungen in der Norm zwischen 6,0 h und 24,0 h. Ein Temperaturanstieg oder ein Temperaturabfall von 10 °C verringert bzw. erhöht die Induktionsperiode etwa um den Faktor 2.

Eine erfindungsgemäße Mischung (wie oben beschrieben, vorzugsweise wie oben als bevorzugt bezeichnet) ist vorzugsweise so zusammengesetzt,
dass sie eine Induktionsperiode größer 6,0 Stunden besitzt, bevorzugt größer 12,0 Stunden, besonders bevorzugt größer 24,0 Stunden, gemäß DIN EN ISO 6886:2008, bei einer Temperatur von 110 °C oder mehr, vorzugsweise 120 °C oder mehr
und/oder
dass sie eine Induktionsperiode besitzt, die gemäß DIN EN ISO 6886:2008 bei einer Temperatur von 110 °C um zumindest 1,0 Stunden, vorzugsweise zumindest 2,0 Stunden größer ist als die Induktionsperiode einer Vergleichsmischung, die bei ansonsten gleicher Zusammensetzung keine Verbindungen und Salze der Formel (II) wie oben definiert umfasst.

Ebenfalls hierin beschrieben sind Mischungen mit den gleichen Eigenschaften, bei denen jedoch Bestandteil (a) aus ein, zwei oder mehr Verbindungen und/oder ein, zwei oder mehr Salze der Verbindungen der Formeln (Ia) und (III) ausgewählt ist. Die Vergleichsmischung umfasst hierbei bei ansonsten gleicher Zusammensetzung keine Verbindungen und Salze der Formel (Ia) bzw. (III).

Die erfindungsgemäße Verwendung wird vorzugsweise so ausgestaltet, dass zum Zwecke der Inhibition eine (erfindungsgemäße) Mischung hergestellt wird, welche einzelne oder mehrere der vorstehend und/oder nachfolgend genannten Eigenschaften besitzt.

Es wurde bereits weiter oben beschrieben, dass insbesondere ungesättigte Fettsäuren und/oder TAG, die insbesondere ungesättigte Fettsäuren enthalten, gegenüber Oxidationsprozessen anfällig sind. Daher umfassen erfindungsgemäße Mischungen (wie oben beschrieben, vorzugsweise wie oben als bevorzugt bezeichnet) vorzugsweise ein, zwei, drei oder mehr Fettsäuren ausgewählt aus der Gruppe bestehend aus gesättigten Fettsäuren, einfach ungesättigten Fettsäuren, zweifach ungesättigten Fettsäuren, dreifach ungesättigten Fettsäuren und mehr als dreifach ungesättigten Fettsäuren und/oder ein, zwei, drei oder mehr Triacylglycerole jeweils enthaltend einen oder mehrere gesättigte Fettsäurereste, einfach ungesättigte Fettsäurereste, zweifach ungesättigte Fettsäurereste dreifach ungesättigte Fettsäurereste und/oder mehr als dreifach ungesättigte Fettsäurereste.

Fettsäuren bzw. Fettsäuren, die in TAG enthalten sind, sind in erfindungsgemäßen Mischungen beispielsweise ausgewählt aus der Gruppe bestehend aus Omega-9-Fettsäuren, Omega-6-Fettsäuren, Omega-3-Fettsäuren und gesättigten Fettsäuren; Fettsäuren bzw. Fettsäuren, die in TAG enthalten sind, sind in erfindungsgemäßen Mischungen vorzugsweise ausgewählt aus der Gruppe bestehend aus Ölsäure, Linolsäure, Linolensäure und Palmitinsäure. Die erfindungsgemäße Verwendung ist selbstverständlich gleichermaßen vorzugsweise auf die genannten Fettsäuren gerichtet; es gelten wie erwähnt die Ausführungen zu bevorzugten Mischungen generell entsprechend für die erfindungsgemäßen Verwendungen, und umgekehrt.

Eine bevorzugte erfindungsgemäße Mischung (wie oben beschrieben, vorzugsweise wie oben als bevorzugt beschrieben), umfasst als Komponente (b) somit ein, zwei, drei oder mehr Fettsäuren ausgewählt aus der Gruppe bestehend aus Ölsäure, Linolsäure, Linolensäure und Palmitinsäure und/oder ein, zwei, drei oder mehr Triacylglycerole jeweils enthaltend einen oder mehrere Fettsäurereste ausgewählt aus der Gruppe bestehend aus Oleat, Linoleat, Linolenoat und Palmitat.

Eine erfindungsgemäße Mischung (wie oben beschrieben, vorzugsweise wie oben als bevorzugt beschrieben) ist vorzugsweise eine homogene Mischung.

In bevorzugten erfindungsgemäßen Mischungen wird die Wirkung der Verbindungen der Komponente (a) durch die Anwesenheit weiterer antioxidativer und/oder konservierender Verbindungen unterstützt. Vgl. die entsprechenden Ausführungen zur erfindungsgemäßen Verwendung weiter oben.

Eine besonders bevorzugte erfindungsgemäße Mischung (wie oben beschrieben, vorzugsweise wie oben als bevorzugt beschrieben) ist eine Mischung, enthaltend zusätzlich ein, zwei, drei oder mehr Verbindungen ausgewählt aus der Gruppe bestehend aus
(d) Verbindungen der Formel (IV) 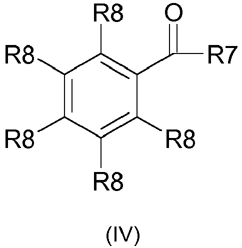 wobei
   der Rest R7 OH, OCH₃ (Methoxy), OC₂H₅ (Ethoxy), oder OCH₂CH₂CH₃m (n-Propoxy) bedeutet und
   jeder Rest R8 unabhängig von der Bedeutung eines anderen Restes R8 H, OH, OCH₃ (Methoxy), OC₂H₅ (Ethoxy) oder OCH₂CH₂CH₃ (n-Propoxy) bedeutet,
   wobei bevorzugt
   drei oder vier der Reste R8 unabhängig von der Bedeutung eines anderen Restes R8 H, OH, OCH₃ (Methoxy) oder OC₂H₅ (Ethoxy) bedeuten und der bzw. die weiteren Reste R8 unabhängig von der Bedeutung eines anderen Restes R8 H, OH, OCH₃ (Methoxy), OC₂H₅ (Ethoxy) oder OCH₂CH₂CH₃ (n- Propoxy) bedeuten,
   wobei besonders bevorzugt
   drei oder vier der Reste R8 H bedeuten und die anderen Reste R8 unabhängig von der Bedeutung eines anderen Restes R8 H, OH, OCH₃ (Methoxy), OC₂H₅ (Ethoxy) oder OCH₂CH₂CH₃ (n-Propoxy) bedeuten,
   und deren pharmazeutisch akzeptablen Salze,
(e) Weinsäure und deren pharmazeutisch akzeptablen Salze,
(f) antioxidativ wirksamen Substanzen ausgewählt aus der Gruppe bestehend aus Tocopherol (E306), Ascorbinsäure (E 300, 307-309), 6-Palmitoyl-L-Ascorbinsäure (E304), Gallate (Propyl, Octyl-, Dodecly- E310-312), Butylhydroxytoluol (BHT, E321), Butylhydroxyanisol (BHA, E320), tert. Butylhydrochinon (TBHQ), Zitronensäure (E330) und Zitrate, Milchsäure (E270) und Lactate, ortho-Phosphorsäure (E338), Phosphate (E450 a-c), Carnosol, Rosmarinextrakt, Carnosolsäure, Rosmarinsäure, Flavonoide einschließlich Flavanole, Flavanone, Flavone, Proanthocyanidine; Hydroxyzimtsäuren einschließlich Kaffeesäure, Ferulasäure, Coumarinsäure; Theaflavine, Grünteeextrakt, Schwarzteeextrakt, Traubenkernextrakt, Weinextrakte, Granatapfelextrakt, Heidelbeerextrakt, Preiselbeerextrakt, Mateteeextrakt, Apfelbeerextrakt, Olivenextrakt, Kakaoextrakt, Zimtextrakt, Sojaextrakt, Kaffeeextrakt, Malzextrakt, Pfefferminzextrakt, Tomatenextrakt, und Apfelextrakt,
   und
(g) Konservierungsmittel ausgewählt aus der Gruppe bestehend aus Benzoesäure, ihre Ester und Salze, Propionsäure und ihre Salze, Salicylsäure und ihre Salze und 2,4-Hexadiensäure (Sorbinsäure) und ihre Salze.

Eine weitere besonders bevorzugte erfindungsgemäße Mischung (wie oben beschrieben, vorzugsweise wie oben als bevorzugt und besonders bevorzugt beschrieben) ist eine erfindungsgemäße Mischung, zusätzlich enthaltend ein, zwei, drei oder mehr Verbindungen ausgewählt aus der Gruppe bestehend aus
(d) Verbindungen der Formel (IV) 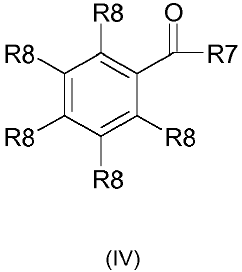 wobei
   der Rest R7 OH bedeutet und
   drei oder vier der Reste R8 H bedeuten und jeder der weiteren (ein bzw. zwei) Reste R8 jeweils unabhängig von der Bedeutung der anderen Reste R8 H, OH oder OCH₃ (Methoxy) bedeutet,
   wobei die Verbindung der Formel (IV) besonders bevorzugt ausgewählt ist aus der Gruppe bestehend aus Verbindung (IVa) (Vanillinsäure), Verbindung (IVb) (para-Hydroxybenzoesäure) und Verbindung (IVc) (Benzoesäure) 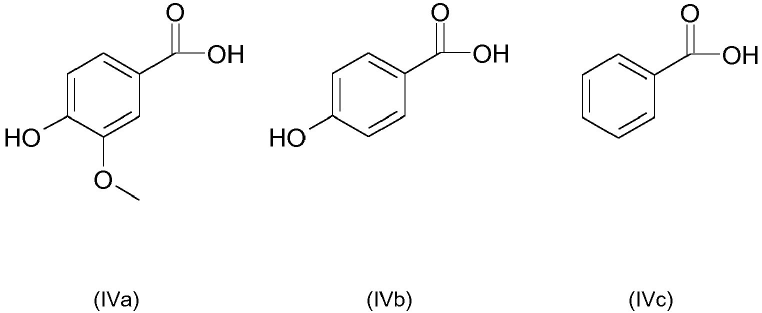 und deren pharmazeutisch akzeptablen Salze.

Die vorstehend definierten erfindungsgemäßen Mischungen (wie oben beschrieben, vorzugsweise wie oben als bevorzugt und besonders bevorzugt beschrieben) sind vorzugsweise Bestandteil von oral konsumierbaren Zubereitungen.

Die vorliegende Erfindung betrifft auch solche oral konsumierbare Zubereitungen, nämlich Zubereitungen, umfassend eine Mischung (wie oben beschrieben, vorzugsweise wie oben als bevorzugt und besonders bevorzugt beschrieben)
sowie ein Substrat oder einen Trägerstoff,
dadurch gekennzeichnet, dass,
bezogen auf die gesamte oral konsumierbare Zubereitung, das Verhältnis der Gesamtmassen von Verbindungen und Salzen der Komponente (a) und Fettsäuren und Triacylglycerolen (Komponente (b)) im Bereich von 1 : 1,25 *10⁶ bis 1 : 6250 liegt,
und/oder
bezogen auf die gesamte oral konsumierbare Zubereitung das Verhältnis der Gesamtmasse von Verbindungen und Salzen der Komponente (a) und der Gesamtmasse von Eisen- (Fe), Kupfer- (Cu), Mangan- (Mn), Zink- (Zn), Nickel- (Ni), Cadmium- (Cd), Blei-(Pb), Cobalt- (Co), Arsen- (As) und Aluminiumionen (Al) im Bereich von 1 : 250 bis 1 : 0,0125 liegt.

Bevorzugte Substrate und Trägerstoffe sind beispielsweise Maltodextrin (mit DE-Werten im Bereich 5 bis 20 sind besonders bevorzugt), Cyclodextrine, Stärke, Eigelb, Kohlenhydrate, natürliche oder künstliche Polysaccharide und/oder Pflanzengummen wie modifizierte Stärken (chemisch oder physikalisch modifizierte Stärken, abgebaute Stärken (Stärkehydrolysate)) oder Gummi Arabicum, Ghatti-Gummi, Traganth, Karaya, Carrageenan, Guarkernmehl, Johannisbrotkernmehl, Alginate, Pektin, Inulin oder Xanthan Gum, färbende Mittel, z.B. zugelassene Lebensmittelfarbstoffe, färbende Pflanzenextrakte, Stabilisatoren, Siliciumdioxid (Kieselsäure, Kieselgel) und viskositätsbeeinflussende Stoffe. Dabei ist unerheblich, welche Pflanze ursprünglich die Stärke zur Herstellung der Stärkehydrolysate geliefert hat. Geeignet und leicht verfügbar sind insbesondere Mais-basierende Stärken sowie Stärken aus Tapioka, Reis, Weizen oder Kartoffeln. Dabei können weitere vorangehend beschriebene Trägerstoffe (z.B. Siliciumdioxid) vorteilhafterweise als Fließhilfsmittel fungieren.

Erfindungsgemäße, oral konsumierbare Zubereitungen (wie vorstehend beschrieben) umfassen vorzugsweise einen Anteil an Fettsäuren und Triacylglycerolen im Bereich von 5 bis 95 Gew.-%, bevorzugt 20 bis 80 Gew.-%, besonders bevorzugt 30 bis 70 Gew.-%.

Erfindungsgemäße, oral konsumierbare Zubereitungen umfassen üblicherweise einen Anteil an Wasser.

Erfindungsgemäße, oral konsumierbare Zubereitungen (wie oben beschrieben) sind insbesondere der Ernährung oder dem Genuss dienende Zubereitungen.

Die erfindungsgemäßen, oral konsumierbare, Zubereitungen sind regelmäßig Produkte, die dazu bestimmt sind, in die menschliche Mundhöhle eingebracht zu werden, dort eine bestimmte Zeit zu verbleiben und anschließend entweder verzehrt (z.B. verzehrfertige Lebensmittel, siehe unten) oder wieder aus der Mundhöhle entfernt zu werden. Zu diesen Produkten gehören dabei sämtliche Erzeugnisse oder Stoffe, die dazu bestimmt sind, in verarbeitetem, teilweise verarbeitetem oder unverarbeitetem Zustand vom Menschen aufgenommen zu werden. Insbesondere sind oral konsumierbare Zubereitungen Erzeugnisse, die Lebensmitteln bei ihrer Herstellung, Verarbeitung oder Bearbeitung zugesetzt werden und dazu vorgesehen sind, in die menschliche Mundhöhle eingebracht zu werden, insbesondere mit dem besagten Lebensmittel. Demnach können solche Zubereitungen wiederum in (weiteren) der Ernährung oder dem Genuss dienenden gebrauchs- oder verzehrfertigen Zubereitungen enthalten sein (der Ernährung oder dem Genuss dienende gebrauchs- oder verzehrfertige Zubereitungen sind im Rahmen des vorliegenden Textes insbesondere Lebensmittel, speziell verzehrfertige Lebensmittel (siehe unten)). Zudem können solche Zubereitungen Bestandteil einer Halbfertigware sein, welche gegebenenfalls wiederum zur Herstellung von der Ernährung oder dem Genuss dienenden gebrauchs- oder verzehrfertigen Zubereitungen verwendet werden kann.

Erfindungsgemäße, oral konsumierbare Zubereitungen sind vorzugsweise Zubereitungen, ausgewählt aus der Gruppe bestehend aus Dressings, Soßen, Bouillonwürfel und - gelees, Suppen (einschließlich Trockensuppen und Dosensuppen), Mayonnaise (mit z.B. Eigelb als Trägerstoff), Margarine, butterhaltigen Erzeugnissen, sahnehaltigen Erzeugnissen (einschließlich Sprühsahne, Backmischungen, Teigprodukte), Crackern, Keksen, Kartoffelchips, extrudierten Produkten (einschließlich extrudierte Maisprodukte mit Erdnuss- und/oder Käsearoma), Erdnüsse und erdnusshaltigen Produkten (einschließlich Snacks, gesalzene Erdnüsse, überzogene Erdnüsse), Backwaren, Konditorwaren, Eiscremes, Desserts, Joghurt, Pudding, Kakao, Cappuccino, Milchkaffee und Trinkschokoladen (einschließlich Instant-Trinkschokolade und Ready-to-drink-Trinkschokolade).

Besonders bevorzugte, erfindungsgemäße, oral konsumierbare Zubereitungen sind Mayonnaisen und mayonnaisehaltige Produkte. Mayonnaisen und mayonnaisehaltige Produkte, die erfindungsgemäße Mischungen (wie oben beschrieben, insbesondere wie oben als bevorzugt und besonders bevorzugt bezeichnet) umfassen, zeigen eine besonders gute Inhibition der Oxidation bzw. verzögern oder inhibieren einen ranzigen Geschmack und/oder Aroma besonders gut.

In einer erfindungsgemäßen oral konsumierbaren Zubereitung (wie oben beschrieben, vorzugsweise umfassend die oben beschriebenen bevorzugten und besonders bevorzugten Bestandteile) liegen die Verbindungen der Komponente (a) vorzugsweise in einer Gesamtkonzentration vor, die geeignet ist,
- die Oxidation der Bestandteile der Komponente (b) der in der erfindungsgemäßen oral konsumierbaren Zubereitung vorliegenden Mischung zu inhibieren, d.h. die Oxidation der ein, zwei, drei oder mehr Fettsäuren und/oder Triacylglycerole von Fettsäuren
   und/oder
- das Ranzigwerden der in der erfindungsgemäßen oral konsumierbaren Zubereitung vorliegenden Mischung zu inhibieren
   und/oder
- durch die Einwirkung von Luftsauerstoff verursachte chemische und/oder sensorische Veränderungen der in der erfindungsgemäßen oral konsumierbaren Zubereitung vorliegenden Mischung zu inhibieren.

Verglichen mit einer oral konsumierbaren Vergleichszubereitung, die bei ansonsten gleicher Zusammensetzung keine Verbindungen der Komponente (a) umfasst, tritt somit in bevorzugten erfindungsgemäßen oral konsumierbaren Zubereitungen ein ranziger Geschmack bzw. ein ranziges Aroma deutlich später auf bzw. wird ein späterer oxidativer Zerfall der in der Zubereitung enthaltenen Bestandteile der Komponente (b) beobachtet.

Die erfindungsgemäßen, der Ernährung oder dem Genuss dienenden Zubereitungen können neben üblicherweise verwendeten tierischen oder pflanzlichen Rohstoffen zusätzlich Wasser, Squalan oder Squalen, Kohlenhydrate, beispielsweise Glucose, Sucrose oder Lactose, Süßstoffe, beispielsweise Aspartam, Cyclamat, Saccharin, Xylit oder Sorbitol, Bitterstoffe, beispielsweise Coffein oder Chinin, bitterunterdrückende Stoffe, beispielsweise Lactisol, geschmacksverstärkende Stoffe, beispielsweise Natriumglutamat oder Inositolphosphat, Aminosäuren, beispielsweise Glycin, Alanin, Leucin, Isoleucin, Valin, Prolin, Lysin, Asparagin, Asparaginsäure, Glutamin, Glutaminsäure, Tryptophan, Phenylalanin, Tyrosin, Threonin, Serin, Cystin, Cystein, Methionin, Hydroxyprolin, Arginin oder Histidin, Peptide, Proteine, Enzyme, (weitere, bisher nicht oben genannte) Fruchtsäuren, vorzugsweise, Äpfelsäure, daneben Emulgatoren, welche vorteilhaft ausgewählt werden können aus der Gruppe der ionischen, nichtionischen, polymeren, phosphathaltigen und zwitterionischen Emulgatoren, sowie insbesondere ein oder mehrere Verdickungsmittel, welches oder welche vorteilhaft ausgewählt werden können aus der Gruppe der Polysaccharide bzw. deren Derivate, z.B. Hyaluronsäure oder Allulose-Derivate, natürliche, naturidentische oder synthetische Aromen sowie Salze, beispielsweise Natriumchlorid oder Kaliumchlorid enthalten.

In einer weiteren Ausführungsform betrifft die vorliegende Erfindung auch ein Verfahren zur Behandlung von Fettsäuren und/oder Triacylglycerolen oder Erzeugnissen, welche ein oder mehrere Fettsäuren und/oder ein oder mehrere Triacylglycerole umfassen, mit folgendem Schritt:
(A) Kontaktieren oder Mischen von
   (a) ein, zwei oder mehr Verbindungen und/oder ein, zwei oder mehr Salzen (Komponente (a)), mit
   (b) ein, zwei oder mehr Fettsäuren und/oder ein, zwei, drei oder mehr Triacylglycerolen bzw. einem Erzeugnis, welches ein oder mehrere Fettsäuren und/oder ein oder mehrere Triacylglycerole umfasst (Komponente (b))
      sowie gleichzeitig oder in einem Folgeschritt, mit
   (c) ein, zwei, drei oder mehr unterschiedliche Metallionen ausgewählt aus der Gruppe bestehend aus Metallkationen der ersten und zweiten Hauptgruppe mit einer Ordnungszahl größer 20, Übergangsmetallkationen und metallische und halbmetallische Kationen der dritten, vierten, fünften und sechsten Hauptgruppe, wobei die Kationen bevorzugt ausgewählt sind aus der Gruppe bestehend aus Eisen- (Fe), Kupfer- (Cu), Mangan- (Mn), Zink- (Zn), Nickel- (Ni), Cadmium- (Cd), Blei- (Pb), Cobalt- (Co), Arsen- (As) und Aluminiumionen (Al), und wobei die Kationen besonders bevorzugt ausgewählt sind aus der Gruppe bestehend aus Eisen- (Fe), Kupfer- (Cu) und Zinkionen (Zn) (Komponente (c))
      Und optional mit
      ein, zwei, drei oder mehr Verbindungen ausgewählt aus der Gruppe bestehend aus
   (d) Verbindungen der Formel (IV) wie vorstehend definiert, vorzugsweise wie vorstehend als bevorzugt definiert und besonders bevorzugt wie vorstehend als besonders bevorzugt definiert,
   (e) Weinsäure und deren pharmazeutisch akzeptablen Salze und
   (f) Tocopherol (E306), Ascorbinsäure (E 300, 307-309), 6-Palmitoyl-L-Ascorbinsäure (E304), Gallate (Propyl, Octyl-, Dodecly- E310-312), Butylhydroxytoluol (BHT, E321), Butylhydroxyanisol (BHA, E320), tert. Butylhydrochinon (TBHQ), Zitronensäure (E330) und Zitrate, Milchsäure (E270) und Lactate, ortho-Phosphorsäure (E338), Phosphate (E450 a-c), Carnosol, Rosmarinextrakt, Carnosolsäure, Rosmarinsäure, Flavonoide einschließlich Flavanole, Flavanone, Flavone, Proanthocyanidine; Hydroxyzimtsäuren einschließlich Kaffeesäure, Ferulasäure, Coumarinsäure; Theaflavine, Grünteeextrakt, Schwarzteeextrakt, Traubenkernextrakt, Weinextrakte, Granatapfelextrakt, Heidelbeerextrakt, Preiselbeerextrakt, Mateteeextrakt, Apfelbeerextrakt, Olivenextrakt, Kakaoextrakt, Zimtextrakt, Sojaextrakt, Kaffeeextrakt, Malzextrakt, Pfefferminzextrakt, Tomatenextrakt, und Apfelextrakt,
   (g) Benzoesäureester, Propionsäure und ihre Salze, Salicylsäure und ihre Salze und 2,4-Hexadiensäure (Sorbinsäure) und ihre Salze,
   so dass die Oxidation der Fettsäuren und/oder der Triacylglycerole bzw. das Ranzigwerden des Erzeugnisses, welches ein oder mehrere Fettsäuren und/oder ein oder mehrere Triacylglycerole umfasst und/oder die durch die Einwirkung von Luftsauerstoff verursachte chemische und/oder sensorische Veränderung des Erzeugnisses, das ein oder mehrere Fettsäuren und/oder ein oder mehrere Triacylglycerole umfasst, inhibiert wird,
   wobei in der resultierenden Mischung
   die Gesamtstoffmenge von Verbindungen der Komponente (a) im Bereich von 0,01 bis 2,9 mmol pro kg Mischung liegt, bevorzugt im Bereich von 0,05 bis 0,20 mmol pro kg Mischung,
   und/oder
   die Gesamtmenge an Fettsäuren und Triacylglycerolen (Komponente (b)) im Bereich von 99,96400 bis 99,99972 Gew.-% liegt, bevorzugt im Bereich von 99,987600 bis 99,99820 Gew.-%, besonders bevorzugt im Bereich von 99,99000 bis 99,99640 Gew.-%
   und/oder
   die Gesamtmenge an Eisen- (Fe), Kupfer- (Cu), Mangan- (Mn), Zink- (Zn), Nickel-(Ni), Cadmium- (Cd), Blei- (Pb), Cobalt- (Co), Arsen- (As) und Aluminiumionen (Al) im Bereich von 0,00020 bis 0,02000 Gew.-% liegt, bevorzugt im Bereich von 0,00100 bis 0,01000 Gew.-%, und besonders bevorzugt im Bereich von 0,00200 bis 0,00800 Gew.-%
   und/oder
   die Gesamtmenge an Verbindungen der Komponente (a), an Fettsäuren und Triacylglycerolen (Komponente (b)) und an Metallionen (Komponente (c)) mindestens 99,96408 Gew.-% beträgt, bevorzugt mindestens 99,98840 Gew.-%, besonders bevorzugt mindestens 99,99160 Gew.-%,
   und/oder
   das Verhältnis der Gesamtmassen an Verbindungen der Komponente (a) und Fettsäuren und Triacylglycerolen (Komponente (b)) im Bereich von 1 : 1,25 *10⁶ bis 1 : 6250 liegt
   und/oder
   das Verhältnis der Gesamtmasse an Verbindungen der Komponente (a) und der Gesamtmasse von Eisen- (Fe), Kupfer- (Cu), Mangan- (Mn), Zink- (Zn), Nickel-(Ni), Cadmium- (Cd), Blei- (Pb), Cobalt- (Co), Arsen- (As) und Aluminiumionen (Al) im Bereich von 1 : 250 bis 1 : 0,0125 liegt,
   wobei die Gewichtsprozentangaben jeweils bezogen sind auf die Gesamtmasse der Mischung.
   Ebenfalls hierin beschrieben sind Verfahren zur Behandlung von Fettsäuren und/oder Triacylglycerolen oder Erzeugnissen mit den gleichen Eigenschaften, bei denen jedoch in Schritt (A)(a) ein, zwei oder mehr Verbindungen und/oder ein, zwei oder mehr Salze aus den Formeln (Ia) und (III) eingesetzt werden.
   Eine besondere Ausführung des erfindungsgemäßen Verfahrens (wie vorstehend beschrieben), ist ein Verfahren mit vorzugsweise folgendem zusätzlichen Schritt:
(B) Lagern des nach Schritt (A) vorliegenden Produktes für einen Zeitraum von 1 Tag oder mehr.

Die folgenden Beispiele dienen zur Verdeutlichung der Erfindung, ohne diese dadurch einzuschränken.

Nachfolgend werden folgende Bezeichnungen verwendet:
Komponente (a): ein, zwei oder mehr Verbindungen der Formel (II) und/oder deren pharmazeutisch akzeptable Salze
Komponente (b): ein, zwei, drei oder mehr Fettsäuren und/oder Triacylglycerole (TAG)
Komponente (c): keine oder ein, zwei, drei oder mehr unterschiedliche Metallionen, die die Oxidation unterstützen

### Wirkungsbeispiel:

### 1.1 Herstellung

Zur Herstellung von Beispielzubereitungen bzw. -mischungen A3 und A4 sowie zur Herstellung von Vergleichszubereitungen bzw. -mischungen V1 und V2 und zur Herstellung der weiteren, nicht erfindungsgemäßen Zubereitungen bzw. Mischungen A1 und A2 wurde jeweils eine Basis-Mayonnaise bereitgestellt, welche die folgende Zusammensetzung besaß (Angaben in Gew.-%):

**Basis-Mayonnaise (Zusammensetzung):**

| | |
|---|---|
| Sojaöl, raffiniert | 80,00 |
| Polyglycerinpolyricinoleat | 0,20 |
| Salz | 1,30 |
| Zucker | 1,00 |
| Eigelb | 6,00 |
| Essigsäure in Wasser | 3,00 |
| Zitronensaft | 0,90 |
| Wasser | 7,58 |

Die Basis-Mayonnaise wurde zur Herstellung der Beispielzubereitungen bzw. - mischungen A3 und A4 jeweils mit 30 ppm einer Verbindung der Komponente (a) vermischt, wobei die Verbindung der Komponente (a) wie folgt ausgewählt wurde:
- für A3:: Isophoron (Verbindung der Formel (II))
- für A4:: Ketoisophoron (Verbindung der Formel (II))

Der jeweils resultierenden Mayonnaise wurden dann Eisenionen (Verbindung der Komponente (c)) in einer Konzentration von 25 ppm durch Zugabe von Mohr'sches Salz beigemischt. Es resultierten die Beispielzubereitungen bzw. -mischungen A3 und A4.

Die Basis-Mayonnaise wurde zur Herstellung der weiteren, nicht erfindungsgemäßen Zubereitungen bzw. Mischungen A1 und A2 jeweils mit 30 ppm der folgenden Bestandteile vermischt:
- Für A1:: Theanin (Verbindung der Formel (Ia))
- für A2:: Cyclobutan-1,3-Dicarbonsäure-2,4-Bis-(2-Hydroxyphenyl) (Verbindung der Formel (III))

Der jeweils resultierenden Mayonnaise wurden dann Eisenionen (Verbindung der Komponente (c)) in einer Konzentration von 25 ppm durch Zugabe von Mohr'sches Salz beigemischt. Es resultierten die Zubereitungen bzw. Mischungen A1 und A2.

Die Basis-Mayonnaise wurde zur Herstellung der Vergleichszubereitung bzw. -mischung V1 mit 75 ppm EDTA vermischt; EDTA ist ein bekannter Wirkstoff zur Inhibierung des Ranzigwerdens. Der resultierenden Mayonnaise wurden Eisenionen (Verbindung der Komponente (c)) in einer Konzentration von 25 ppm durch Zugabe von Mohr'sches Salz beigemischt. Es resultierte die Vergleichszubereitung bzw. -mischung V1.

Die Basis-Mayonnaise wurde zur Herstellung der Vergleichszubereitung bzw. -mischung V2 mit 30 ppm Maltol vermischt; Maltol ist ein bekannter Wirkstoff zur Inhibierung des Ranzigwerdens. Der resultierenden Mayonnaise wurden Eisenionen (Verbindung der Komponente (c)) in einer Konzentration von 25 ppm durch Zugabe von Mohr'sches Salz beigemischt. Es resultierte die Vergleichszubereitung bzw. -mischung V2.

### 1.2 Lagerung

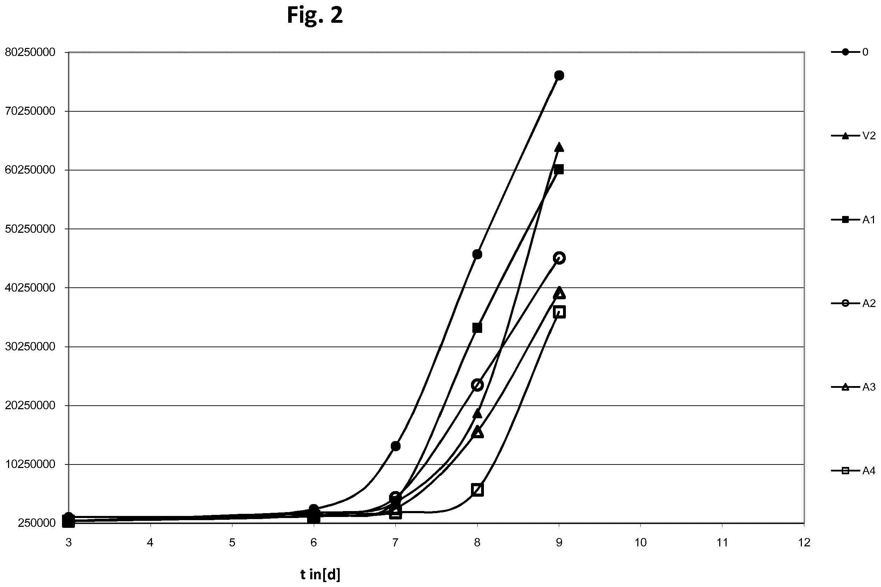

Die so hergestellten Beispielzubereitungen bzw. -mischungen A3 und A4 und die Vergleichszubereitungen bzw. -mischungen V1 und V2 sowie die weiteren, nicht erfindungsgemäßen Zubereitungen bzw. Mischungen A1 und A2 wurden jeweils für die Dauer von 14 Tagen bei 50°C in einem dunklen Wärmeschrank gelagert; bereits nach 9 Tagen wurden aussagekräftige Messdaten erhalten, vgl. hierzu Fig. 2.

### 1.3 Analyse

Nach Lagerung gemäß 1.2 wurden die resultierenden Zubereitungen bzw. Mischungen untersucht. Bestimmte durch Oxidation gebildete und angereicherte Abbauprodukte in den gelagerten Zubereitungen bzw. Mischungen wurden mittels GC-MS analysiert und quantifiziert.

Hierzu wurden zwei Methoden eingesetzt:
1. Methode: Direkte Extraktion der Aldehyde aus der Probe mit Symstixx® und
2. Methode: Messung des ausgewählten Aldehyds Hexanal im Dampfraum (Headspace) über der Probe.

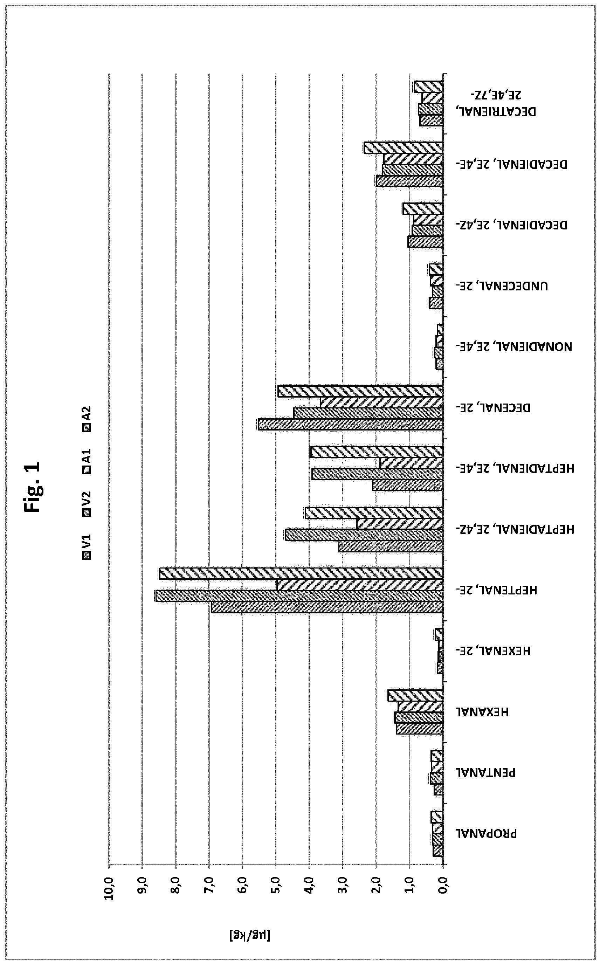

Zu den zwei Methoden im Einzelnen siehe die folgenden Ausführungen. Die analysierten Abbauprodukte ergeben sich aus den Angaben in den Figuren 1 (1. Methode nach einer Lagerdauer von 14 Tagen) und 2 (2. Methode bis zu Lagerdauer von 9 Tagen).

### 1. Methode: Direkte Extraktion der Aldehyde aus der Probe mit Symstixx®

### Probenvorbereitung:

- 1,00 g der jeweiligen Probe wurde möglichst ohne Verschmieren an der Glaswandung auf den Boden eines 20 ml Headspacevials pipettiert
- Für jeden Messpunkt und jeden Wirkstoff wurde eine eigene Probe angesetzt und luftdicht verschlossen

### Probennahme:

- Bei jeder Messung wurde ein Symstixx (Firma Symrise, siehe EP 2 233 206 A1; Apparatur zur Bestimmung von flüchtigen Inhaltsstoffen einer Mischung) mit einer Länge von 6,0 cm im Headspace der jeweiligen Probe mit einem Septum und einer Klemmkappe arretiert
- Equilibrierung erfolgte für 60 Minuten bei 40°C im Wärmeschrank
- Anschließend wurde der Symstixx in ein Thermodesorptions (TDS)-Probenröhrchen (Firma Gerstel) überführt und analysiert.

### Analytik:

Gaschromatographie mit Thermodesorption-Probenaufgabe (TDS der Firma Gerstel); Geräteparameter:
- Temperaturprogramm des TDS: 20°C - 60°C/min. - 180°C - 6 min. (splitless)
- Injektorsystem: Cold injection system (CIS4) operated with solvent vent, Temperaturprogramm: -30°C - 12°C/sec. - 240°C - 4 min.
- Gaschromatograph (GC) Agilent 6890
- Temperaturprogramm des Gaschromatographen: 50°C - 4°C/min. - 210°C - 12°C/min. - 240°C - 27,5 min.
- Trennsäule: DB-Wax 60m 0,25mm 0,25µm
- Detektor: Massenselektiver Detektor (MSD) Agilent 5973N
- Integration der relevanten Peaks (verschiedene Aldehyde)

### 2. Methode: Messung des ausgewählten Aldehyds Hexanal im Dampfraum (Headspace) über der Probe

### Probenvorbereitung:

- 1,00 g der Probe wurde möglichst ohne Verschmieren an der Glaswandung auf den Boden eines 20 ml Headspace-vials pipettiert
- Für jeden Messpunkt und jeden Wirkstoff wurde eine eigene Probe angesetzt und luftdicht mit einer Bördelkappe verschlossen
- Die Lagerung erfolgte bei 50°C im dunklen Wärmeschrank

### Probennahme:

- Das jeweilige Vial wurde ungeöffnet in den Agitator eines MPS2 (Firma Gerstel) überführt und für die Dauer von 20 Minuten bei 50°C equilibriert
- Anschließend wurden 2,0 ml Headspace der Probe direkt analysiert (2,5 ml Headspace-Spritze, 34°C)

### Analytik:

- Injektorsystem: CIS4 operated in splitless mode; Temperaturprogramm: 150°C - 12°C/sec. - 200°C - 10 min.
- Gaschromatograph (GC) Agilent 6890
- Temperaturprogramm: 40°C - 8°C/min. - 240°C
- Trennsäule: ZB-Wax plus 60m 0,32mm 0,25µm
- Detektor: MSD Agilent 5973N
- Integration der relevanten Peaks (Hexanal)
- Vergleich der Peakflächen bezogen auf den Zeitverlauf

Figur 1 zeigt die Analyseergebnisse gemäß der 1. Methode zu den Zubereitungen bzw. -mischungen A1 und A2 sowie zu den Vergleichszubereitungen bzw. -mischungen V1 und V2 nach einer Lagerdauer von 14 Tagen.

Figur 2 zeigt die Analyseergebnisse gemäß der 2. Methode zu den Beispielzubereitungen bzw. -mischungen A3 und A4 sowie zu der Vergleichszubereitung bzw. -mischung V2 und zu den weiteren, nicht erfindungsgemäßen Zubereitungen bzw. Mischungen A1 und A2.

Figur 1 zeigt die gebildete Menge an Aldehyden in µg/kg (bezogen auf die Gesamtmasse der Zubereitung). Die Figur zeigt, dass durch die erfindungsgemäße Verwendung von Verbindungen der Komponente (a) in den Zubereitungen bzw. -mischungen A1 und A2 eine ähnliche Stabilisierung der Komponente (b) erreicht wurde, wie durch die Verwendung von EDTA in der Vergleichszubereitung V1 und wie durch die Verwendung von Maltol in der Vergleichszubereitung V2.

Figur 2 zeigt die gebildete Menge an Hexanal (Integration der Peakflächen nach Analyse; Zahlenwerte entsprechen der Peakflächengröße) im Zeitraum von 3 bis 9 Tagen in den Beispielzubereitungen bzw. -mischungen A3 und A4, sowie in der Vergleichszubereitung V2 und in den weiteren, nicht erfindungsgemäßen Zubereitungen bzw. Mischungen A1 und A2. Ein kleinerer Wert bedeutet hier (im Vergleich mit einem vergleichswert) eine bessere Inhibition der Autoxidation. Die Darstellung mit der Bezeichnung "0" bezieht sich auf eine Referenzzubereitung, die neben der Basismayonnaise lediglich Eisenionen (Komponente (c)) aber keinen Inhibitor (Komponente (a)) enthält. Durch die erfindungsgemäße Verwendung von Verbindungen der Komponente (a) in den Beispielzubereitungen bzw. -mischungen A3 und A4 wird die Bildung von Hexanal im Vergleich mit der Referenzzubereitung sowie im Vergleich mit Vergleichszubereitung V2 verzögert (inhibiert). Somit bewirkt die erfindungsgemäße Verwendung von Verbindungen der Komponente (a) eine bessere Stabilisierung der Komponente (b) als die Verwendung von Maltol in der Vergleichszubereitung V2.

Die vorstehenden Auswertungen zu den Beispielzubereitungen bzw. -mischungen verdeutlichen die effiziente Wirkung von Verbindungen der Komponente (a) bei erfindungsgemäßer Verwendung.

Die Rezepturen der folgenden allgemeinen Anwendungsbeispiele 1 bis 6 umfassen Anteile von Fettsäuren bzw. Triacylglycerolen (Komponente (b)), denen bereits eine Menge der Komponente (a) zugesetzt wurde. Das Verhältnis der Gesamtmassen der Verbindung der Komponente (a) und der Verbindungen der Komponente (b) wurde dabei jeweils so eingestellt, dass es im Bereich von 1 : 1,25 *10⁶ bis 1 : 6250 liegt.

Jedes allgemeine Anwendungsbeispiel wurde mit insgesamt zwei alternativen, spezifischen Rezepturen durchgeführt, wobei als Komponente (a) alternativ Verbindung (IIa) (3,5,5-Trimethyl-2-cyclohexen-1-on (Isophoron)) und Verbindung (IIb) (2,6,6-Trimethyl-2-cyclohexen-1,4-dion (Ketoisophoron)) eingesetzt wurden. Die nachfolgenden Angaben zu den allgemeinen Anwendungsbeispielen betreffen somit jeweils zwei alternative, spezifische Ausgestaltungen. Weiter alternativ wurden in allgemeinen Anwendungsbeispielen Mischungen der, Verbindung (IIa) (3,5,5-Trimethyl-2-cyclohexen-1-on (Isophoron)) und Verbindung (IIb) (2,6,6-Trimethyl-2-cyclohexen-1,4-dion (Ketoisophoron)) eingesetzt; hinsichtlich der eingesetzten Gesamtmassen gilt das oben Gesagte entsprechend.

### Anwendungsbeispiel 1: Mayonnaise

| **Rohstoffname** | **Gehalt in Gew.-%** |
|---|---|
| Sojaöl (als Komponente (b)), raffiniert (enthaltend einen Zusatz an Komponente (a); Verhältnis der Gesamtmassen (a) : (b) = 1 : 10000) | 80,02 |
| Polyglycerinpolyricinoleat | 0,20 |
| Salz | 1,30 |
| Zucker | 1,00 |
| Eigelb | 6,00 |
| Essigsäure in Wasser | 3,00 |
| Zitronensaft | 0,90 |
| Wasser | 7,58 |

Es wird zunächst eine Mischung von Polyglycerinpolyricinoleat, Salz und Zucker in Wasser hergestellt. Anschließend wird das Öl unter Zugabe des Eigelbs in die Mischung emulgiert. In einem letzten Schritt werden die Essigsäure und der Zitronensaft zugegeben und die resultierende Mischung mit Hilfe eines Handrührers homogenisiert. Die Herstellung kann ebenfalls in einem Thermomix (Firma Vorwerk) erfolgen.

### Anwendungsbeispiel 2: Speiseöle, z.B. auch für Frittierzwecke

| **Rohstoffname** | **Gehalt in Gew.-%** | | |
|---|---|---|---|
| | **A** | **B** | **C** |
| Sojaöl (als Komponente (b)), raffiniert (enthaltend einen Zusatz an Komponente (a); Verhältnis der Gesamtmassen (a) : (b) = 1 : 7000) | 99,99 | | |
| Distelöl (als Komponente (b)), kalt gepresst (enthaltend einen Zusatz an Komponente (a); Verhältnis der Gesamtmassen (a) : (b) = 1 : 7000) | | 99,99 | |
| Olivenöl (als Komponente (b)), kalt gepresst (enthaltend einen Zusatz an Komponente (a); Verhältnis der Gesamtmassen (a) : (b) = 1 : 7000) | | | 99,99 |
| alpha-Tocopherol | | 0,01 | 0,01 |

### Anwendungsbeispiel 3: Halbfettmargarine

| Bestandteil | Gew.-%-Anteil | Einsatz in g |
|---|---|---|
| Gehärtetes Pflanzenfett (als Komponente (b), enthaltend einen Zusatz an Komponente (a); Verhältnis der Gesamtmassen (a) : (b) = 1 : 15000) | 40,05 | 600,75 |
| Trinkwasser | 55,38 | 830,7 |
| Salz | 0,20 | 3,0 |
| Monoglyceride Monomuls 90-35 (Grünau / Cognis) | 0,80 | 12,0 |
| Citronensäure | 0,02 | 0,3 |
| Molkenprotein | 1,50 | 22,5 |
| Lecithin | 2,00 | 30,0 |
| beta-Carotin-Emulsion | | 8 Tropfen |
| Aroma | 0,05 | 0,75 |

Das Wasser und das Fett wurden getrennt auf ca. 55°C erwärmt. Salz, Citronensäure, Molkenprotein und beta-Carotin-Emulsion wurden in das erwärmte Wasser eingerührt und gleichmäßig verteilt. Monoglyceride Monomuls und Lecithin wurden in die erwärmte Fettphase gegeben und ebenfalls gleichmäßig verteilt. Anschließend wurde die Wasserphase langsam der Fettphase hinzugefügt, zunächst unter langsamen Rühren (300 Upm), dann unter kräftigem Rühren (1500 Upm, 30 sec, Messereinsatz, Ultraturrax). Das Aroma wurde zuletzt untergerührt. Die Zubereitung wurde auf 35°C herunter gekühlt, abgefüllt und kühl gelagert (5°C).

### Anwendungsbeispiel 4: Rahmeiscreme

| Bestandteil | Gew.-%-Anteil | Einsatz in g |
|---|---|---|
| Magermilch | 60,65 | 606,5 |
| Pflanzenfettmischung (als Komponente (b), enthaltend einen Zusatz an Komponente (a); Verhältnis der Gesamtmassen (a) : (b) = 1 : 20000), enthaltend ca. 50 % Distelöl und 50 % Palmfett, Schmelzbereich 35 bis 40 °C | 16,50 | 165,0 |
| Zucker | 12,00 | 120,0 |
| Magermilchpulver | 5,00 | 50,0 |
| Glucosesirup 72 % Trockensubstanz | 5,00 | 50,0 |
| Emulgator SE 30 (Grindstedt Products, Dänemark) | 0,65 | 6,5 |
| Aroma, enthaltend 0,1 % Diacetyl und 1 % Vanillin | 0,20 | 2,0 |

Die Magermilch und der Glucosesirup wurden auf 55° erhitzt und Zucker, Magermilchpulver sowie Emulgator hinzugefügt. Das Pflanzenfett wurde zunächst vorerhitzt, dann hinzugefügt und die gesamte Masse auf 58°C erwärmt. Nach Zugabe des Aromas wurde homogenisiert (180 / 50 bar). Die resultierende Masse wurde 1 min lang bei 78°C heiß gehalten, anschließend auf 2 bis 4 °C abgekühlt und wurde anschließend einem 10-stündigen Reifeprozess unterzogen. Danach wurde die gereifte Masse abgefüllt und bei-18°C gelagert.

### Anwendungsbeispiel 5: Fettarme Mayonnaise

| Bestandteil | Gew.-%-Anteil | Einsatz in g |
|---|---|---|
| Sonnenblumenöl (als Komponente (b), enthaltend einen Zusatz an Komponente (a); Verhältnis der Gesamtmassen (a) : (b) = 1 : 20000) | 10,505% | 52,525 |
| Emulgator (Lecithin) | 0,50% | 2,5 |
| Leitungswasser | 71,80% | 359,0 |
| Essig 10%ig | 7,50% | 37,5 |
| Modifizierte Wachsmaisstärke | 4,00% | 20,0 |
| Saccharose | 2,50% | 12,5 |
| Senfmehl | 1,00% | 5,0 |
| Speisesalz | 0,70% | 3,5 |
| Natriumsaccharin | 0,02% | 0,1 |
| Aminosäuren | 0,025% | 0,125 |
| Stabilisator (Xanthan) | 0,20% | 1,0 |
| Stabilisator (Natriumkasein) | 0,30% | 1,5 |
| Farbstoff | | einige Tropfen |
| Ei-Aroma | 0,15% | 0,75 |
| Zitronensaft | 0,50% | 2,5 |
| Citronensäure | 0,30% | 1,5 |

Das Lecithin und das Sonnenblumenöl wurden zunächst vermischt. Stärke, Saccharose, Senfmehl, Salz, Saccharin, Aminosäuren, Xanthan, Kasein und Farbstoff wurden ebenfalls vermischt und in das kalte Leitungswasser mit einem Flächenrührer eingerührt. Die wässrige Mischung wurde aufgekocht und anschließend bis auf 50°C abgekühlt. Das Lecithin-Öl-Gemisch wurde danach der wässrigen Mischung hinzugefügt und mit einem Ultra-Turrax homogenisiert. Während der Homogenisierung wurde zunächst eine Mischung aus Essig/Zitronensaft/Citronensäure und abschließend das Ei-Aroma langsam hinzugefügt.

### Anwendungsbeispiel 6: Fischöl enthaltende Getränkeemulsion

| Bestandteil | Gew.-%-Anteil | Einsatz in g |
|---|---|---|
| Invertzuckersirup, 72,7% aus Zuckerrübe | 13,75 | 137,5 |
| Citronensäurelösung in Wasser | 0,5 | 5,0 |
| Fischöl-Emulsion (als Komponente (b), enthaltend einen Zusatz an Komponente (a); Verhältnis der Gesamtmassen (a) : (b) = 1 : 50000)) | 17,0 | 170,0 |
| Carbonisiertes Trinkwasser ca. 8 g/l CO₂ | 68,63 | 686,3 |
| Aroma (Lemon flavor) | 0,12 | 1,2 |

Die Citronensäurelösung, die Fischölemulsion und das Aroma wurden dem Invertzuckersirup zugegeben und gut miteinander vermengt, so dass ein einheitlicher Sirup entstand. Der Sirup wurde in Flaschen gefüllt und mit carbonisiertem Trinkwasser verdünnt.

Die eingesetzte Fischöl-Emulsion ist eine erfindungsgemäße oral konsumierbare Zubereitung; sie umfasst ca. 30 Gew.-% Öl. Ihr Einsatz sorgt dafür, dass die Getränkeemulsion auch nach langer Lagerzeit keine ranzige Sensorik entwickelt.

## Patentansprüche

1. Verwendung von einer, zwei, drei oder mehr Verbindungen ausgewählt aus der Gruppe bestehend aus
Verbindungen der Formel (II) 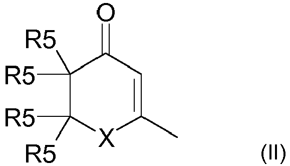 wobei
jeder Rest R5 unabhängig von der Bedeutung der jeweils anderen Reste R5 H oder CH₃ bedeutet
und
X CH₂ oder CO bedeutet
und deren pharmazeutisch akzeptablen Salzen
zur Inhibition der durch zwei- oder höherwertige Metallionen katalysierten Oxidation von Fettsäuren und/oder Triacylglycerolen und/oder des durch Metallionen katalysierten Ranzigwerdens von Erzeugnissen, welche ein oder mehrere Fettsäuren und/oder ein oder mehrere Triacylglycerole umfassen.

2. Verwendung nach Anspruch 1, wobei
die Fettsäuren ausgewählt sind aus der Gruppe bestehend aus gesättigten Fettsäuren sowie einfach, zweifach, dreifach und mehr als dreifach ungesättigten Fettsäuren
und/oder
die Triacylglycerole gesättigte Fettsäurereste, einfach ungesättigte Fettsäurereste, zweifach ungesättigte Fettsäurereste, dreifach ungesättigte und/oder mehr als dreifach ungesättigte Fettsäurereste enthalten.

3. Mischung umfassend
(a) ein, zwei oder mehr Verbindungen und/oder ein, zwei oder mehr Salze wie in Anspruch 1 definiert,
(b) ein, zwei, drei oder mehr Fettsäuren und/oder Triacylglycerole,
(c) ein, zwei, drei oder mehr unterschiedliche Metallionen ausgewählt aus der Gruppe bestehend aus Metallkationen der ersten und zweiten Hauptgruppe mit einer Ordnungszahl größer 20, Übergangsmetallkationen und metallische und halbmetallische Kationen der dritten, vierten, fünften und sechsten Hauptgruppe,
wobei die Kationen bevorzugt ausgewählt sind aus der Gruppe bestehend aus Eisen-, Kupfer-, Mangan-, Zink-, Nickel-, Cadmium-, Blei-, Cobalt-, Arsen- und Aluminiumionen, und
wobei die Kationen besonders bevorzugt ausgewählt sind aus der Gruppe bestehend aus Eisen-, Kupfer- und Zinkionen,
wobei
die Gesamtstoffmenge von Verbindungen und Salzen wie in Anspruch 1 definiert im Bereich von 0,01 bis 2,9 mmol pro kg Mischung liegt, bevorzugt im Bereich von 0,05 bis 0,20 mmol pro kg Mischung,
und/oder
die Gesamtmenge an Fettsäuren und Triacylglycerolen im Bereich von 99,96400 bis 99,99972 Gew.-% liegt, bevorzugt im Bereich von 99,987600 bis 99,99820 Gew.-%, besonders bevorzugt im Bereich von 99,99000 bis 99,99640 Gew.-% und/oder
die Gesamtmenge an Eisen-, Kupfer-, Mangan-, Zink-, Nickel-, Cadmium-, Blei-, Cobalt-, Arsen- und Aluminiumionen im Bereich von 0,00020 bis 0,02000 Gew.-% liegt, bevorzugt im Bereich von 0,00100 bis 0,01000 Gew.-%, und besonders bevorzugt im Bereich von 0,00200 bis 0,00800 Gew.-%
und/oder
die Gesamtmenge an Verbindungen und Salzen wie in Anspruch 1 definiert, an Fettsäuren und Triacylglycerolen und an Metallionen mindestens 99,96408 Gew.-% beträgt, bevorzugt mindestens 99,98840 Gew.-%, besonders bevorzugt mindestens 99,99160 Gew.-%,
und/oder
das Verhältnis der Gesamtmassen von (a) Verbindungen und Salzen wie in Anspruch 1 definiert und (b) Fettsäuren und Triacylglycerolen im Bereich von 1 : 1,25 *10⁶ bis 1 : 6250 liegt
und/oder
das Verhältnis der Gesamtmasse von (a) Verbindungen und Salzen wie in Anspruch 1 definiert und der Gesamtmasse von Eisen-, Kupfer-, Mangan-, Zink-, Nickel-, Cadmium-, Blei-, Cobalt-, Arsen- und Aluminiumionen im Bereich von 1 : 250 bis 1 : 0,0125 liegt,
wobei die Gewichtsprozentangaben jeweils bezogen sind auf die Gesamtmasse der Mischung.

4. Mischung nach Anspruch 3, wobei die Mischung
maximal 3200 µg/kg Hexanal, bevorzugt maximal 1600 µg/kg Hexanal und besonders bevorzugt maximal 320 µg/kg Hexanal und/oder
maximal 40 µg/kg (E, Z)-2,4-Decadienal, bevorzugt maximal 20 µg/kg (E, Z)-2,4-Decadienal und besonders bevorzugt maximal 4 µg/kg (E, Z)-2,4-Decadienal und/oder
maximal 1800 µg/kg (E, E)-2,4-Decadienal, bevorzugt maximal 900 µg/kg (E, E)-2,4- Decadienal und besonders bevorzugt maximal 180 µg/kg (E, E)-2,4-Decadienal
und/oder
maximal 140000 µg/kg (E)-2-Heptenal, bevorzugt maximal 70000 µg/kg (E)-2-Heptenal und besonders bevorzugt maximal 14000 µg/kg (E)-2-Heptenal enthält.

5. Mischung nach Anspruch 4, wobei die Mischung so zusammengesetzt ist,
dass sie eine Induktionsperiode größer 6,0 Stunden besitzt, bevorzugt größer 12,0 Stunden, besonders bevorzugt größer 24,0 Stunden, gemäß DIN EN ISO 6886:2008, bei einer Temperatur von 110 °C oder mehr, vorzugsweise 120 °C oder mehr
und/oder
dass sie eine Induktionsperiode besitzt, die gemäß DIN EN ISO 6886:2008 bei einer Temperatur von 110 °C um zumindest 1,0 Stunden, vorzugsweise zumindest 2,0 Stunden größer ist als die Induktionsperiode einer Vergleichsmischung, die bei ansonsten gleicher Zusammensetzung keine Verbindungen und Salze umfasst wie in Anspruch 1 definiert.

6. Mischung nach einem der Ansprüche 3 bis 5, umfassend
(b)
ein, zwei, drei oder mehr Fettsäuren ausgewählt aus der Gruppe bestehend aus gesättigten Fettsäuren, einfach ungesättigten Fettsäuren, zweifach ungesättigten Fettsäuren, dreifach ungesättigten Fettsäuren und mehr als dreifach ungesättigten Fettsäuren
und/oder
ein, zwei, drei oder mehr Triacylglycerole jeweils enthaltend einen oder mehrere gesättigte Fettsäurereste, einfach ungesättigte Fettsäurereste, zweifach ungesättigte Fettsäurereste dreifach ungesättigte Fettsäurereste und/oder mehr als dreifach ungesättigte Fettsäurereste.

7. Mischung nach einem der Ansprüche 3 bis 6,
umfassend
(b)
ein, zwei, drei oder mehr Fettsäuren ausgewählt aus der Gruppe bestehend aus Ölsäure, Linolsäure, Linolensäure und Palmitinsäure
und/oder
ein, zwei, drei oder mehr Triacylglycerole jeweils enthaltend einen oder mehrere Fettsäurereste ausgewählt aus der Gruppe bestehend aus Oleat, Linoleat, Linolenoat und Palmitat.

8. Mischung nach einem der Ansprüche 3 bis 7, wobei die Mischung eine homogene Mischung ist.

9. Mischung nach einem der Ansprüche 3 bis 8, enthaltend zusätzlich ein, zwei, drei oder mehr Verbindungen ausgewählt aus der Gruppe bestehend aus
(d) Verbindungen der Formel (IV) 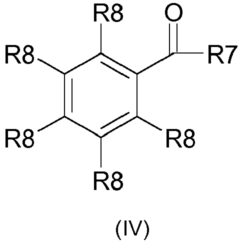 wobei
der Rest R7 OH, OCH₃, OC₂H₅, oder OCH₂CH₂CH₃ bedeutet und
jeder Rest R8 unabhängig von der Bedeutung eines anderen Restes R8 H, OH, OCH₃, OC₂H₅ oder OCH₂CH₂CH₃ bedeutet,
wobei bevorzugt
drei oder vier der Reste R8 unabhängig von der Bedeutung eines anderen Restes R8 H, OH, OCH₃ oder OC₂H₅ bedeuten und der bzw. die weiteren Reste R8 unabhängig von der Bedeutung eines anderen Restes R8 H, OH, OCH₃, OC₂H₅ oder OCH₂CH₂CH₃ bedeuten,
wobei besonders bevorzugt
drei oder vier der Reste R8 H bedeuten und die anderen Reste R8 unabhängig von der Bedeutung eines anderen Restes R8 H, OH, OCH₃, OC₂H₅ oder OCH₂CH₂CH₃ bedeuten
und deren pharmazeutisch akzeptablen Salze,
(e) Weinsäure und deren pharmazeutisch akzeptablen Salze,
(f) antioxidativ wirksamen Substanzen ausgewählt aus der Gruppe bestehend aus Tocopherol , Ascorbinsäure, 6-Palmitoyl-L-Ascorbinsäure, Gallate (Propyl, Octyl-, Dodecly-), Butylhydroxytoluol (BHT), Butylhydroxyanisol (BHA), tert. Butylhydrochinon (TBHQ), Zitronensäure und Zitrate, Milchsäure und Lactate, ortho-Phosphorsäure, Phosphate, Carnosol, Rosmarinextrakt, Carnosolsäure, Rosmarinsäure, Flavonoide einschließlich Flavanole, Flavanone, Flavone, Proanthocyanidine; Hydroxyzimtsäuren einschließlich Kaffeesäure, Ferulasäure, Coumarinsäure; Theaflavine, Grünteeextrakt, Schwarzteeextrakt, Traubenkernextrakt, Weinextrakte, Granatapfelextrakt, Heidelbeerextrakt, Preiselbeerextrakt, Mateteeextrakt, Apfelbeerextrakt, Olivenextrakt, Kakaoextrakt, Zimtextrakt, Sojaextrakt, Kaffeeextrakt, Malzextrakt, Pfefferminzextrakt, Tomatenextrakt, und Apfelextrakt,
und
(g) Konservierungsmittel ausgewählt aus der Gruppe bestehend aus Benzoesäureester, Propionsäure und ihre Salze, Salicylsäure und ihre Salze und 2,4-Hexadiensäure (Sorbinsäure) und ihre Salze.

10. Oral konsumierbare Zubereitung, umfassend
eine Mischung nach einem der Ansprüche 3 bis 9
sowie
ein Substrat oder einen Trägerstoff,
**dadurch gekennzeichnet, dass**
bezogen auf die gesamte oral konsumierbare Zubereitung das Verhältnis der Gesamtmassen von (a) Verbindungen und Salzen wie in Anspruch 1 definiert und (b) Fettsäuren und Triacylglycerolen im Bereich von 1 : 1,25 *10⁶ bis 1 : 6250 liegt,
und/oder
bezogen auf die gesamte oral konsumierbare Zubereitung das Verhältnis der Gesamtmasse von (a) Verbindungen und Salzen wie in Anspruch 1 definiert und der Gesamtmasse von Eisen-, Kupfer-, Mangan-, Zink-, Nickel-, Cadmium-, Blei-, Cobalt-, Arsen- und Aluminiumionen im Bereich von 1 : 250 bis 1 : 0,0125 liegt.

11. Oral konsumierbare Zubereitung nach Anspruch 10 umfassend einen Anteil an Fettsäuren und Triacylglycerolen im Bereich von 5 bis 95 Gew.-%, bevorzugt 20 bis 80 Gew.-%, besonders bevorzugt 30 bis 70 Gew.-%.

12. Oral konsumierbare Zubereitung nach einem der Ansprüche 10 oder 11, ausgewählt aus der Gruppe bestehend aus
Dressings, Soßen, Bouillonwürfel und -gelees, Suppen (einschließlich Trockensuppen und Dosensuppen), Mayonnaise, Margarine, butterhaltigen Erzeugnissen, sahnehaltigen Erzeugnissen (einschließlich Sprühsahne, Backmischungen, Teigprodukte), Crackern, Keksen, Kartoffelchips, extrudierten Produkten (einschließlich extrudierte Maisprodukte mit Erdnuss- und/oder Käsearoma), Erdnüsse und erdnusshaltigen Produkten (einschließlich Snacks, gesalzene Erdnüsse, überzogene Erdnüsse), Backwaren, Konditorwaren, Eiscremes, Desserts, Joghurt, Pudding, Kakao, Cappuccino, Milchkaffee, Trinkschokoladen (einschließlich Instant-Trinkschokolade und Ready-to-drink-Trinkschokolade).

13. Verfahren zur Behandlung von
Fettsäuren und/oder Triacylglycerolen
oder
Erzeugnissen, welche ein oder mehrere Fettsäuren und/oder ein oder mehrere Triacylglycerole umfassen,
mit folgendem Schritt:
(A) Kontaktieren oder Mischen von
(a) ein, zwei oder mehr Verbindungen und/oder ein, zwei oder mehr Salzen wie in Anspruch 1 definiert,
mit
(b) ein, zwei oder mehr Fettsäuren und/oder ein, zwei, drei oder mehr Triacylglycerolen bzw. einem Erzeugnis, welches ein oder mehrere Fettsäuren und/oder ein oder mehrere Triacylglycerole umfasst sowie, gleichzeitig oder in einem Folgeschritt, mit
(c) ein, zwei, drei oder mehr unterschiedlichen Metallionen ausgewählt aus der Gruppe bestehend aus Metallkationen der ersten und zweiten Hauptgruppe mit einer Ordnungszahl größer 20, Übergangsmetallkationen und metallische und halbmetallische Kationen der dritten, vierten, fünften und sechsten Hauptgruppe, wobei die Kationen bevorzugt ausgewählt sind aus der Gruppe bestehend aus Eisen-, Kupfer-, Mangan-, Zink-, Nickel-, Cadmium-, Blei-, Cobalt-, Arsen- und Aluminiumionen, und wobei die Kationen besonders bevorzugt ausgewählt sind aus der Gruppe bestehend aus Eisen-, Kupfer- und Zinkionen
und optional mit
ein, zwei, drei oder mehr Verbindungen ausgewählt aus der Gruppe bestehend aus
(d) Verbindungen der Formel (IV) wie in Anspruch 9 definiert,
(e) Weinsäure und deren pharmazeutisch akzeptablen Salze und
(f) Tocopherol, Ascorbinsäure, 6-Palmitoyl-L-Ascorbinsäure, Gallate (Propyl, Octyl-, Dodecly-), Butylhydroxytoluol (BHT), Butylhydroxyanisol (BHA), tert. Butylhydrochinon (TBHQ), Zitronensäure und Zitrate, Milchsäure und Lactate, ortho-Phosphorsäure, Phosphate, Carnosol, Rosmarinextrakt, Carnosolsäure, Rosmarinsäure, Flavonoide einschließlich Flavanole, Flavanone, Flavone, Proanthocyanidine; Hydroxyzimtsäuren einschließlich Kaffeesäure, Ferulasäure, Coumarinsäure; Theaflavine, Grünteeextrakt, Schwarzteeextrakt, Traubenkernextrakt, Weinextrakte, Granatapfelextrakt, Heidelbeerextrakt, Preiselbeerextrakt, Mateteeextrakt, Apfelbeerextrakt, Olivenextrakt, Kakaoextrakt, Zimtextrakt, Sojaextrakt, Kaffeeextrakt, Malzextrakt, Pfefferminzextrakt, Tomatenextrakt, und Apfelextrakt.
(g) Benzoesäureester, Propionsäure und ihre Salze, Salicylsäure und ihre Salze und 2,4-Hexadiensäure (Sorbinsäure) und ihre Salze,
so dass
- die Oxidation der Fettsäuren und/oder der Triacylglycerole bzw.
- das Ranzigwerden des Erzeugnisses, welches ein oder mehrere Fettsäuren und/oder ein oder mehrere Triacylglycerole umfasst und/oder
- die durch die Einwirkung von Luftsauerstoff verursachte chemische und/oder sensorische Veränderung des Erzeugnisses, das ein oder mehrere Fettsäuren und/oder ein oder mehrere Triacylglycerole umfasst,
inhibiert wird,
wobei in der resultierenden Mischung
die Gesamtstoffmenge von Verbindungen und Salzen wie in Anspruch 1 definiert im Bereich von 0,01 bis 2,9 mmol pro kg Mischung liegt, bevorzugt im Bereich von 0,05 bis 0,20 mmol pro kg Mischung,
und/oder
die Gesamtmenge an Fettsäuren und Triacylglycerolen im Bereich von 99,96400 bis 99,99972 Gew.-% liegt, bevorzugt im Bereich von 99,987600 bis 99,99820 Gew.-%, besonders bevorzugt im Bereich von 99,99000 bis 99,99640 Gew.-% und/oder
die Gesamtmenge an Eisen-, Kupfer-, Mangan-, Zink-, Nickel-, Cadmium-, Blei-, Cobalt-, Arsen- und Aluminiumionen im Bereich von 0,00020 bis 0,02000 Gew.-% liegt, bevorzugt im Bereich von 0,00100 bis 0,01000 Gew.-%, und besonders bevorzugt im Bereich von 0,00200 bis 0,00800 Gew.-%
und/oder
die Gesamtmenge an Verbindungen und Salzen wie in Anspruch 1 definiert, an Fettsäuren und Triacylglycerolen und an Metallionen mindestens 99,96408 Gew.-% beträgt, bevorzugt mindestens 99,98840 Gew.-%, besonders bevorzugt mindestens 99,99160 Gew.-%,
und/oder
das Verhältnis der Gesamtmassen von (a) Verbindungen und Salzen wie in Anspruch 1 definiert und (b) Fettsäuren und Triacylglycerolen im Bereich von 1 : 1,25 *10⁶ bis 1 : 6250 liegt
und/oder
das Verhältnis der Gesamtmasse von (a) Verbindungen und Salzen wie in Anspruch 1 definiert und der Gesamtmasse von Eisen-, Kupfer-, Mangan-, Zink-, Nickel-, Cadmium-, Blei-, Cobalt-, Arsen- und Aluminiumionen im Bereich von 1 : 250 bis 1 : 0,0125 liegt,
wobei die Gewichtsprozentangaben jeweils bezogen sind auf die Gesamtmasse der Mischung,
vorzugsweise mit folgendem zusätzlichen Schritt:
(B) Lagern des nach Schritt (A) vorliegenden Produktes für einen Zeitraum von 1 Tag oder mehr.

## Claims

1. Use of one, two, three or more compounds selected from the group consisting of
compounds of formula (II) 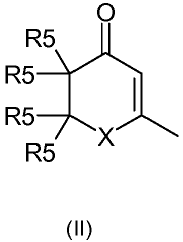 wherein
each residue R5 independently of the meaning of the respective other residues R5 denotes H or CH₃
and
X denotes CH₂ or CO
and the pharmaceutically acceptable salts thereof
for the inhibition of the oxidation of fatty acids and/or triacylglycerols catalyzed by divalent or higher-valent metal ions and/or of the rancidification of products that comprise one or more fatty acids and/or one or more triacylglycerols catalyzed by metal ions.

2. The use according to claim 1, wherein
the fatty acids are selected from the group consisting of saturated fatty acids and singly, doubly, triply and more than triply unsaturated fatty acids
and/or
the triacylglycerols contain saturated fatty acid residues, singly unsaturated fatty acid residues, doubly unsaturated fatty acid residues, triply unsaturated and/or more than triply unsaturated fatty acid residues.

3. Mixture comprising
(a) one, two or more compounds and/or one, two or more salts as defined in claim 1,
(b) one, two, three or more fatty acids and/or triacylglycerols,
(c) one, two, three or more different metal ions
selected from the group consisting of metal cations of the first and second main group with an atomic number above 20, transition metal cations and metallic and semi-metallic cations of the third, fourth, fifth and sixth main group,
wherein the cations are preferably selected from the group consisting of iron, copper, manganese, zinc, nickel, cadmium, lead, cobalt, arsenic and aluminum ions, and
wherein the cations are particularly preferably selected from the group consisting of iron, copper and zinc ions,
wherein
the total amount of substance of compounds and salts as defined in claim 1 is in the range of from 0.01 to 2.9 mmol per kg of mixture, preferably in the range of from 0.05 to 0.20 mmol per kg of mixture,
and/or
the total amount of fatty acids and triacylglycerols is in the range of from 99.96400 to 99.99972 wt.%, preferably in the range of from 99.987600 to 99.99820 wt.%, particularly preferably in the range of from 99.99000 to 99.99640 wt.%
and/or
the total amount of iron, copper, manganese, zinc, nickel, cadmium, lead, cobalt, arsenic and aluminum ions is in the range of from 0.00020 to 0.02000 wt.%, preferably in the range of from 0.00100 to 0.01000 wt.%, and particularly preferably in the range of from 0.00200 to 0.00800 wt.%
and/or
the total amount of compounds and salts as defined in claim 1, of fatty acids and triacylglycerols and of metal ions is at least 99.96408 wt.%, preferably at least 99.98840 wt.%, particularly preferably at least 99.99160 wt.%,
and/or
the ratio of the total masses of (a) compounds and salts as defined in claim 1 and (b) fatty acids and triacylglycerols is in the range of from 1 : 1.25 *10⁶ to 1 : 6250
and/or
the ratio of the total mass of (a) compounds and salts as defined in claim 1 and the total mass of iron, copper, manganese, zinc, nickel, cadmium, lead, cobalt, arsenic and aluminum ions is in the range of from 1 : 250 to 1 : 0.0125,
wherein the percentages by weight are each referred to the total weight of the mixture.

4. The mixture according to claim 3, wherein the mixture contains
maximum 3200 µg/kg hexanal, preferably maximum 1600 µg/kg hexanal and particularly preferably maximum 320 µg/kg hexanal and/or
maximum 40 µg/kg (E,Z)-2,4-decadienal, preferably maximum 20 µg/kg (E,Z)-2,4-decadienal and particularly preferably maximum 4 µg/kg (E,Z)-2,4-decadienal
and/or
maximum 1800 µg/kg (E,E)-2,4-decadienal, preferably maximum 900 µg/kg (E,E)-2,4-decadienal and particularly preferably maximum 180 µg/kg (E,E)-2,4-decadienal
and/or
maximum 140000 µg/kg (E)-2-heptenal, preferably maximum 70000 µg/kg (E)-2-heptenal and particularly preferably maximum 14000 µg/kg (E)-2-heptenal.

5. The mixture according to claim 4, wherein the mixture is composed in such a way
that it has an induction period of more than 6.0 hours, preferably of more than 12.0 hours, particularly preferably of more than 24.0 hours, according to DIN EN ISO 6886:2008, at a temperature of 110°C or higher, preferably 120°C or higher
and/or
that it has an induction period which is, according to DIN EN ISO 6886:2008, at a temperature of 110°C at least 1.0 hours, preferably at least 2.0 hours more than the induction period of a comparative mixture, which with an otherwise identical composition does not comprise any compounds and salts as defined in claim 1.

6. The mixture according to one of the claims 3 to 5, comprising
(b)
one, two, three or more fatty acids selected from the group consisting of saturated fatty acids, singly unsaturated fatty acids, doubly unsaturated fatty acids, triply unsaturated fatty acids and more than triply unsaturated fatty acids
and/or
one, two, three or more triacylglycerols each containing one or more saturated fatty acid residues, singly unsaturated fatty acid residues, doubly unsaturated fatty acid residues triply unsaturated fatty acid residues and/or more than triply unsaturated fatty acid residues.

7. The mixture according to one of the claims 3 to 6,
comprising
(b)
one, two, three or more fatty acids selected from the group consisting of oleic acid, linoleic acid, linolenic acid and palmitic acid
and/or
one, two, three or more triacylglycerols in each case containing one or more fatty acid residues selected from the group consisting of oleate, linoleate, linolenoate and palmitate.

8. The mixture according to one of the claims 3 to 7, wherein the mixture is a homogeneous mixture.

9. The mixture according to one of the claims 3 to 8, additionally containing one, two, three or more compounds selected from the group consisting of
(d) compounds of formula (IV) 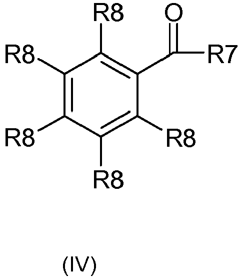 wherein
the residue R7 denotes OH, OCH₃, OC₂H₅, or OCH₂CH₂CH₃ and
each residue R8, independently of the meaning of another residue R8, denotes H, OH, OCH₃, OC₂H₅ or OCH₂CH₂CH₃,
wherein preferably
three or four of the residues R8, independently of the meaning of another residue R8, denote H, OH, OCH₃ or OC₂H₅ and the further residue or residues R8, independently of the meaning of another residue R8, denote H, OH, OCH₃, OC₂H₅ or OCH₂CH₂CH₃,
wherein particularly preferably
three or four of the residues R8 denote H and the other residues R8, independently of the meaning of another residue R8, denote H, OH, OCH₃, OC₂H₅ or OCH₂CH₂CH₃
and pharmaceutically acceptable salts thereof,
(e) tartaric acid and pharmaceutically acceptable salts thereof,
(f) substances with an antioxidant effect selected from the group consisting of tocopherol, ascorbic acid, 6-palmitoyl-L-ascorbic acid, gallates (propyl, octyl, dodecyl), butylhydroxytoluene (BHT), butylhydroxyanisole (BHA), tert.-butylhydroquinone (TBHQ), citric acid and citrates, lactic acid and lactates, orthophosphoric acid, phosphates, carnosol, rosemary extract, carnosic acid, rosmarinic acid, flavonoids including flavanols, flavanones, flavones, proanthocyanidins; hydroxycinnamic acids including caffeic acid, ferulic acid, coumaric acid; theaflavins, green tea extract, black tea extract, grapeseed extract, wine extracts, pomegranate extract, bilberry extract, cranberry extract, mate tea extract, apple berry extract, olive extract, cocoa extract, cinnamon extract, soya extract, coffee extract, malt extract, peppermint extract, tomato extract, and apple extract,
and
(g) preservatives selected from the group consisting of benzoic acid ester, propionic acid and salts thereof, salicylic acid and salts thereof and 2,4-hexadienoic acid (sorbic acid) and salts thereof.

10. Orally consumable preparation, comprising
a mixture according to one of the claims 3 to 9
as well as
a substrate or a carrier,
**characterized in that**
referred to the total orally consumable preparation, the ratio of the total masses of (a) compounds and salts as defined in claim 1 and (b) fatty acids and triacylglycerols is in the range of from 1 : 1.25 *10⁶ to 1 : 6250,
and/or
referred to the total orally consumable preparation, the ratio of the total mass of (a) compounds and salts as defined in claim 1 and the total mass of iron, copper, manganese, zinc, nickel, cadmium, lead, cobalt, arsenic and aluminum ions is in the range of from 1 : 250 to 1 : 0.0125.

11. The orally consumable preparation according to claim 10, comprising a proportion of fatty acids and triacylglycerols in the range of from 5 to 95 wt.%, preferably 20 to 80 wt.%, particularly preferably 30 to 70 wt.%.

12. The orally consumable preparation according to one of the claims 10 or 11, selected from the group consisting of
dressings, sauces, stock cubes and jellies, soups (including dried soups and canned soups), mayonnaise, margarine, butter-containing products, cream-containing products (including spray cream, baking mixes, dough products), crackers, biscuits, potato chips, extruded products (including extruded maize products with peanut and/or cheese flavor), peanuts and peanut-containing products (including snacks, salted peanuts, coated peanuts), baked products, pastries, ice cream, desserts, yoghurt, pudding, cocoa, cappuccino, milk coffee, drinking chocolates (including instant drinking chocolates and ready-to-drink drinking chocolates).

13. Method of treating
fatty acids and/or triacylglycerols
or
products that comprise one or more fatty acids and/or one or more triacylglycerols, with the following step:
(A) contacting or mixing
(a) one, two or more compounds and/or one, two or more salts as defined in claim 1,
with
(b) one, two or more fatty acids and/or one, two, three or more triacylglycerols or, respectively, a product that comprises one or more fatty acids and/or one or more triacylglycerols
as well as, simultaneously or in a subsequent step, with
(c) one, two, three or more different metal ions selected from the group consisting of metal cations of the first and second main group with an atomic number above 20, transition metal cations and metallic and semi-metallic cations of the third, fourth, fifth and sixth main group, wherein the cations are preferably selected from the group consisting of iron, copper, manganese, zinc, nickel, cadmium, lead, cobalt, arsenic and aluminum ions, and wherein the cations are particularly preferably selected from the group consisting of iron, copper and zinc ions
and optionally with
one, two, three or more compounds selected from the group consisting of
(d) compounds of formula (IV) as defined in claim 9,
(e) tartaric acid and pharmaceutically acceptable salts thereof and
(f) tocopherol, ascorbic acid, 6-palmitoyl-L-ascorbic acid, gallates (propyl, octyl, dodecyl), butylhydroxytoluene (BHT), butylhydroxyanisole (BHA), tert.-butylhydroquinone (TBHQ), citric acid and citrates, lactic acid and lactates, orthophosphoric acid, phosphates, carnosol, rosemary extract, carnosic acid, rosmarinic acid, flavonoids including flavanols, flavanones, flavones, proanthocyanidins; hydroxycinnamic acids including caffeic acid, ferulic acid, coumaric acid; theaflavins, green tea extract, black tea extract, grapeseed extract, wine extracts, pomegranate extract, bilberry extract, cranberry extract, mate tea extract, apple berry extract, olive extract, cocoa extract, cinnamon extract, soya extract, coffee extract, malt extract, peppermint extract, tomato extract, and apple extract,
(g) benzoic acid ester, propionic acid and salts thereof, salicylic acid and salts thereof and 2,4-hexadienoic acid (sorbic acid) and salts thereof,
such that
- the oxidation of the fatty acids and/or of the triacylglycerols or, respectively,
- the rancidification of the product that comprises one or more fatty acids and/or one or more triacylglycerols
and/or
- the chemical and/or sensory change of the product that comprises one or more fatty acids and/or one or more triacylglycerols, caused by the action of the oxygen of the air,
is inhibited,
wherein in the resulting mixture
the total amount of substance of compounds and salts as defined in claim 1 is in the range of from 0.01 to 2.9 mmol per kg of mixture, preferably in the range of from 0.05 to 0.20 mmol per kg of mixture
and/or
the total amount of fatty acids and triacylglycerols is in a ange of from 99.96400 to 99.99972 wt.-%, preferably in the range of from 99.987600 to 99.99820 wt.-%, particularly preferably in the range of from 99.99000 to 99.99640 wt.-%
and/or
the total amount of iron, copper, manganese, zinc, nickel, cadmium, lead, cobalt, arsenic and aluminum ions is in the range of from 0.00020 to 0.02000 wt.-%, preferably in the range of from 0.00100 to 0.01000 wt.-% and particularly preferably in the range of from 0.00200 to 0.00800 wt.-%
and/or
the total amount of compounds and salts as defined in claim 1, of fatty acids and triacylglycerols and of metal ions is at least 99.96408 wt.-%, preferably at least 99.98840 wt.-%, particularly preferably at least 99.99160 wt.-%,
and/or
the ratio of the total masses of (a) compounds and salts as defined in claim 1 and (b) fatty acids and triacylglycerols is in the range of from 1 : 1.25*10⁶ to 1 : 6250
and/or
the ratio of the total mass of (a) compounds and salts as defined in claim 1 and the total mass of iron, copper, manganese, zinc, nickel, cadmium, lead, cobalt, arsenic and aluminum ions is in the range of from 1 : 250 to 1 : 0.00125,
wherein the percentages by weight are each referred to the total weight of the mixture
preferably with the following additional step:
(B) storing the product present after step (A) for a period of 1 day or more.

## Revendications

1. Utilisation d'un, de deux, de trois composés ou plus, choisis dans le groupe constitué par
des composés de formule (II) 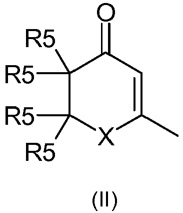 dans laquelle
chaque reste R5 signifie, indépendamment de la signification des autres restes R5 respectifs, H ou CH₃
et
X signifie CH₂ ou CO
et leurs sels pharmaceutiquement acceptables,
pour l'inhibition de l'oxydation d'acides gras et/ou de triacylglycérols, catalysée par des ions métalliques bivalents ou des ions métalliques de valence supérieure, et/ou du rancissement, catalysé par des ions métalliques, de produits qui comprennent un ou plusieurs acides gras et/ou un ou plusieurs triacylglycérols.

2. Utilisation selon la revendication 1, dans laquelle
les acides gras sont choisis dans le groupe constitué par les acides gras saturés ainsi que les acides gras mono-, di-, tri-insaturés et plus que tri-insaturés
et/ou
les triacylglycérols contiennent des restes d'acides gras saturés, des restes d'acides gras mono-insaturés, des restes d'acides gras di-insaturés, des restes d'acides gras tri-insaturés et/ou plus que tri-insaturés.

3. Mélange comprenant
(a) un, deux composés ou plus et/ou un, deux sels ou plus, tels que définis dans la revendication 1,
(b) un, deux, trois acides gras et/ou triacylglycérols, ou plus,
(c) un, deux, trois ions métalliques différents, ou plus,
choisis dans le groupe constitué par les cations métalliques des premier et deuxième groupes principaux ayant un nombre atomique supérieur à 20, les cations de métaux de transition et les cations métalliques et semi-métalliques des troisième, quatrième, cinquième et sixième groupes principaux,
dans lequel les cations sont de préférence choisis dans le groupe constitué par les ions de fer, de cuivre, de manganèse, de zinc, de nickel, de cadmium, de plomb, de cobalt, d'arsenic et d'aluminium, et
dans lequel les cations sont choisis de manière particulièrement préférée dans le groupe constitué par les ions de fer, de cuivre et de zinc,
dans lequel
la quantité totale de substance de composés et de sels tels que définis dans la revendication 1 se situe dans la plage allant de 0,01 à 2,9 mmol par kg de mélange, de préférence dans la plage allant de 0,05 à 0,20 mmol par kg de mélange,
et/ou
la quantité totale d'acides gras et de triacylglycérols se situe dans la plage allant de 99,96400 à 99,99972 % en poids, de préférence dans la plage allant de 99,987600 à 99,99820 % en poids, de manière particulièrement préférée dans la plage allant de 99,99000 à 99,99640 % en poids,
et/ou
la quantité totale d'ions de fer, de cuivre, de manganèse, de zinc, de nickel, de cadmium, de plomb, de cobalt, d'arsenic et d'aluminium se situe dans la plage allant de 0,00020 à 0,02000 % en poids, de préférence dans la plage allant de 0,00100 à 0,01000 % en poids et de manière particulièrement préférée dans la plage allant de 0,00200 à 0,00800 % en poids,
et/ou
la quantité totale de composés et de sels tels que définis dans la revendication 1, d'acides gras et de triacylglycérols et d'ions métalliques est d'au moins 99,96408 % en poids, de préférence d'au moins 99,98840 % en poids, de manière particulièrement préférée d'au moins 99,99160 % en poids,
et/ou
le rapport des masses totales de (a) composés et sels tels que définis dans la revendication 1 et de (b) acides gras et triacylglycérols se situe dans la plage allant de 1 : 1,25 *10⁶ à 1 : 6250,
et/ou
le rapport de la masse totale de (a) composés et sels tels que définis dans la revendication 1 et de la masse totale d'ions de fer, de cuivre, de manganèse, de zinc, de nickel, de cadmium, de plomb, de cobalt, d'arsenic et d'aluminium se situe dans la plage allant de 1 : 250 à 1 : 0,0125,
dans lequel les pourcentages en poids sont rapportés chacun à la masse totale du mélange.

4. Mélange selon la revendication 3, dans lequel le mélange contient
3200 µg/kg au maximum d'hexanal, de préférence 1600 µg/kg au maximum d'hexanal et de manière particulièrement préférée 320 µg/kg au maximum d'hexanal, et/ou
40 µg/kg au maximum de (E, Z)-2,4-décadiénal, de préférence 20 µg/kg au maximum de (E, Z)-2,4-décadiénal et de manière particulièrement préférée 4 µg/kg au maximum de (E, Z)-2,4-décadiénal
et/ou
1800 µg/kg au maximum de (E, E)-2,4-décadiénal, de préférence 900 µg/kg au maximum de (E, E)-2,4-décadiénal et de manière particulièrement préférée 180 µg/kg au maximum de (E, E)-2,4-décadiénal
et/ou
140000 µg/kg au maximum de (E)-2-hepténal, de préférence 70000 µg/kg au maximum de (E)-2-hepténal et de manière particulièrement préférée 14000 µg/kg au maximum de (E)-2-hepténal.

5. Mélange selon la revendication 4, dans lequel le mélange est composé de telle manière
qu'il présente une période d'induction supérieure à 6,0 heures, de préférence supérieure à 12,0 heures, de manière particulièrement préférée supérieure à 24,0 heures, selon la norme DIN EN ISO 6886:2008, à une température de 110 °C ou plus, de préférence de 120 °C ou plus
et/ou
qu'il présente une période d'induction qui, selon la norme DIN EN ISO 6886:2008, à une température de 110 °C, est d'au moins 1,0 heure, de préférence d'au moins 2,0 heures supérieure à la période d'induction d'un mélange comparatif qui, la composition étant égale par ailleurs, ne comprend pas de composés et de sels tels que définis dans la revendication 1.

6. Mélange selon l'une quelconque des revendications 3 à 5, comprenant (b)
un, deux, trois acides gras ou plus qui sont choisis dans le groupe constitué par les acides gras saturés, les acides gras mono-insaturés, les acides gras di-insaturés, les acides gras tri-insaturés et les acides gras plus que tri-insaturés
et/ou
un, deux, trois triacylglycérols ou plus qui contiennent chacun un ou plusieurs restes d'acides gras saturés, des restes d'acides gras mono-insaturés, des restes d'acides gras di-insaturés, des restes d'acides gras tri-insaturés et/ou des restes d'acides gras plus que tri-insaturés.

7. Mélange selon l'une quelconque des revendications 3 à 6
comprenant
(b)
un, deux, trois acides gras ou plus choisis dans le groupe constitué par l'acide oléique, l'acide linoléique, l'acide linolénique et l'acide palmitique
et/ou
un, deux, trois triacylglycérols ou plus contenant chacun un ou plusieurs restes d'acides gras choisis dans le groupe constitué par l'oléate, le linoléate, le lino-lénoate et le palmitate.

8. Mélange selon l'une quelconque des revendications 3 à 7, dans lequel le mélange est un mélange homogène.

9. Mélange selon l'une quelconque des revendications 3 à 8, contenant en outre un, deux, trois composés ou plus choisis dans le groupe constitué par
(d) des composés de formule (IV) 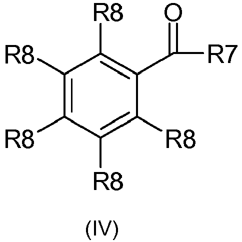 dans laquelle
le reste R7 signifie OH, OCH₃, OC₂H₅ ou OCH₂CH₂CH₃,et
chaque reste R8 signifie, indépendamment de la signification d'un autre reste R8, H, OH, OCH₃, OC₂H₅ ou OCH₂CH₂CH₃,
dans laquelle, de préférence,
trois ou quatre des restes R8 signifient, indépendamment de la signification d'un autre reste R8, H, OH, OCH₃ ou OC₂H₅ et ledit ou bien lesdits autre(s) reste(s) R8 signifient, indépendamment de la signification d'un autre reste R8, H, OH, OCH₃, OC₂H₅ ou OCH₂CH₂CH₃,
dans laquelle, de manière particulièrement préférée,
trois ou quatre des restes R8 signifient H et les autres restes R8 signifient, indépendamment de la signification d'un autre reste R8, H, OH, OCH₃, OC₂H₅ ou OCH₂CH₂CH₃
et leurs sels pharmaceutiquement acceptables,
(e) l'acide tartrique et ses sels pharmaceutiquement acceptables,
(f) des substances à effet antioxydant choisies dans le groupe constitué par le tocophérol, l'acide ascorbique, l'acide 6-palmitoyl-L-ascorbique, les gallates (de propyle, d'octyl, de dodécyle), le butylhydroxytoluène (BHT), le butylhydroxyanisole (BHA), le tert-butylhydrochinone (TBHQ), l'acide citrique et les citrates, l'acide lactique et les lactates, l'acide orthophosphorique, les phosphates, le carnosol, l'extrait de romarin, l'acide carnosique, l'acide rosmarinique, les flavonoïdes y compris les flavanols, les flavanones, les flavones, les proanthocyanidines; les acides hydroxycinnamiques y compris l'acide caféique, l'acide férulique, l'acide coumarinique; les théaflavines, l'extrait de thé vert, l'extrait de thé noir, l'extrait de pépin de raisin, les extraits de vin, l'extrait de grenade, l'extrait de myrtille, l'extrait d'airelle rouge, l'extrait de maté, l'extrait d'aronia, l'extrait d'olives, l'extrait de cacao, l'extrait de cannelle, l'extrait de soja, l'extrait de café, l'extrait de malt, l'extrait de menthe poivrée, l'extrait de tomate et l'extrait de pomme,
et
(g) des agents conservateurs choisis dans le groupe constitué par l'ester d'acide benzoïque, l'acide propionique et ses sels, l'acide salicylique et ses sels et l'acide 2,4-hexadiène (acide sorbique) et ses sels.

10. Composition consommable par voie orale, comprenant
un mélange selon l'une quelconque des revendications 3 à 9
ainsi qu'
un substrat ou une substance de support,
**caractérisée par le fait que**,
par rapport à la composition totale consommable par voie orale, le rapport des masses totales de (a) composés et sels tels que définis dans la revendication 1 et de (b) acides gras et triacylglycérols se situe dans la plage allant de 1 : 1,25 *10⁶ à 1 : 6250,
et/ou
par rapport à la composition totale consommable par voie orale, le rapport de la masse totale de (a) composés et sels tels que définis dans la revendication 1 et de la masse totale d'ions de fer, de cuivre, de manganèse, de zinc, de nickel, de cadmium, de plomb, de cobalt, d'arsenic et d'aluminium se situe dans la plage allant de 1 : 250 à 1 : 0,0125.

11. Composition consommable par voie orale selon la revendication 10, comprenant une proportion d'acides gras et de triacylglycérols comprise entre 5 et 95 % en poids, de préférence entre 20 et 80 % en poids, de manière particulièrement préférée entre 30 à 70 % en poids.

12. Composition consommable par voie orale selon l'une quelconque des revendications 10 ou 11, choisie dans le groupe constitué par
les sauces de salade, les sauces, les cubes et gelées de consommé, les soupes (y compris les soupes sèches et les soupes en conserve), la mayonnaise, la margarine, les produits contenant du beurre, les produits contenant de la crème (y compris la crème fouettée en aérosol, les mélanges à pâtisserie, les produits en pâte), les crackers, les biscuits, les chips de pomme de terre, les produits extrudés (y compris les produits de maïs extrudés à l'arôme d'arachide et/ou de fromage), les arachides et les produits contenant des arachides (y compris les snacks, les arachides salées, les arachides enrobées), les produits de boulangerie, les pâtisseries, les glaces, les desserts, les yaourts, le pudding, le cacao, le cappuccino, le café au lait, les chocolats à boire (y compris le chocolat à boire instantané et le chocolat à boire prêt-à-boire).

13. Procédé de traitement d'
acides gras et/ou de triacylglycérols
ou
de produits comprenant un ou plusieurs acides gras et/ou un ou plusieurs triacylglycérols,
comprenant l'étape suivante:
(A) mettre en contact ou mélanger
(a) un, deux composés ou plus et/ou un, deux sels ou plus, tels que définis dans la revendication 1,
avec
(b) un, deux acides gras ou plus et/ou un, deux, trois triacylglycérols ou plus ou bien un produit qui comprend un ou plusieurs acides gras et/ou un ou plusieurs triacylglycérols
ainsi que, en même temps ou dans une étape subséquente, avec
(c) un, deux, trois ions métalliques différents ou plus, choisis dans le groupe constitué par des cations métalliques des premier et deuxième groupes principaux ayant un nombre atomique supérieur à 20, les cations de métaux de transition et les cations métalliques et semi-métalliques des troisième, quatrième, cinquième et sixième groupes principaux, dans lequel les cations sont choisis de préférence dans le groupe constitué par les ions de fer, de cuivre, de manganèse, de zinc, de nickel, de cadmium, de plomb, de cobalt, d'arsenic et d'aluminium, et dans lequel, d'une manière particulièrement préférée, les cations sont choisis dans le groupe constitué par les ions de fer, de cuivre et de zinc,
et de manière optionnelle avec
un, deux, trois composés ou plus choisis dans le groupe constitué par
(d) des composés de formule (IV) tels que définis dans la revendication 9,
(e) l'acide tartrique et ses sels pharmaceutiquement acceptables, et
(f) le tocophérol, l'acide ascorbique, l'acide 6-palmitoyl-L-ascorbique, les gallates (de propyle, d'octyl, de dodécyle), le butylhydroxytoluène (BHT), le butylhydroxyanisole (BHA), le tert-butylhydrochinone (TBHQ), l'acide citrique et les citrates, l'acide lactique et les lactates, l'acide orthophosphorique, les phosphates, le carnosol, l'extrait de romarin, l'acide carnosique, l'acide rosmarinique, les flavonoïdes y compris les flavanols, les flavanones, les flavones, les proanthocyanidines; les acides hydroxycinnamiques y compris l'acide caféique, l'acide férulique, l'acide coumarinique; les théaflavines, l'extrait de thé vert, l'extrait de thé noir, l'extrait de pépin de raisin, les extraits de vin, l'extrait de grenade, l'extrait de myrtille, l'extrait d'airelle rouge, l'extrait de maté, l'extrait d'aronia, l'extrait d'olives, l'extrait de cacao, l'extrait de cannelle, l'extrait de soja, l'extrait de café, l'extrait de malt, l'extrait de menthe poivrée, l'extrait de tomate et l'extrait de pomme,
(g) l'ester d'acide benzoïque, l'acide propionique et ses sels, l'acide salicylique et ses sels et l'acide 2,4-hexadiène (acide sorbique) et ses sels,
de sorte que
- l'oxydation des acides gras et/ou des triacylglycérols
ou bien
- le rancissement du produit qui comprend un ou plusieurs acides gras et/ou un ou plusieurs triacylglycérols,
et/ou
- la modification chimique et/ou sensorielle, provoquée par l'influence de l'oxygène atmosphérique, du produit qui comprend un ou plusieurs acides gras et/ou un ou plusieurs triacylglycérols,
est inhibé,
dans lequel, dans le mélange résultant,
la quantité totale de substance de composés et de sels tels que définis dans la revendication 1 se situe dans la plage allant de 0,01 à 2,9 mmol par kg de mélange, de préférence dans la plage allant de 0,05 à 0,20 mmol par kg de mélange,
et/ou
la quantité totale d'acides gras et de triacylglycérols se situe dans la plage allant de 99,96400 à 99,99972 % en poids, de préférence dans la plage allant de 99,987600 à 99,99820 % en poids, de manière particulièrement préférée dans la plage allant de 99,99000 à 99,99640 % en poids,
et/ou
la quantité totale d'ions de fer, de cuivre, de manganèse, de zinc, de nickel, de cadmium, de plomb, de cobalt, d'arsenic et d'aluminium se situe dans la plage allant de 0,00020 à 0,02000 % en poids, de préférence dans la plage allant de 0,00100 à 0,01000 % en poids et de manière particulièrement préférée dans la plage allant de 0,00200 à 0,00800 % en poids,
et/ou
la quantité totale de composés et de sels tels que définis dans la revendication 1, d'acides gras et de triacylglycérols et d'ions métalliques est d'au moins 99,96408 % en poids, de préférence d'au moins 99,98840 % en poids, de manière particulièrement préférée d'au moins 99,99160 % en poids,
et/ou
le rapport des masses totales de (a) composés et sels tels que définis dans la revendication 1 et de (b) acides gras et triacylglycérols se situe dans la plage allant de 1 : 1,25 *10⁶ à 1 : 6250,
et/ou
le rapport de la masse totale de (a) composés et sels tels que définis dans la revendication 1 et de la masse totale d'ions de fer, de cuivre, de manganèse, de zinc, de nickel, de cadmium, de plomb, de cobalt, d'arsenic et d'aluminium se situe dans la plage allant de 1 : 250 à 1 : 0,0125,
dans lequel les pourcentages en poids sont rapportés chacun à la masse totale du mélange,
comprenant de préférence l'étape supplémentaire suivante consistant à:
(B) stocker le produit présent après l'étape (A), pour une période de 1 jour ou plus.
